# EUROPÄISCHE PATENTSCHRIFT

(11) **EP 3 615 347 B1**
(45) Veröffentlichungstag und Bekanntmachung des Hinweises auf die Patenterteilung: **15.03.2023**
(21) Anmeldenummer: 18718796.8
(22) Anmeldetag: 18.04.2018
(51) Int. Cl.: B42D 25/324, B42D 25/351, B42D 25/36, B42D 25/378, B42D 25/387, B42D 25/45, G06K 19/07, B42D 25/46, B42D 25/382, B42D 25/41, B42D 25/455, B42D 25/328, B42D 25/305

(54) **SICHERHEITSEINLAGE FÜR EIN AUSWEISDOKUMENT UND VERFAHREN ZUR HERSTELLUNG EINER SICHERHEITSEINLAGE FÜR EIN AUSWEISDOKUMENT**
SECURITY INLAY FOR AN IDENTITY DOCUMENT AND METHOD FOR PRODUCING A SECURITY INLAY FOR AN IDENTITY DOCUMENT
INSERT DE SÉCURITÉ POUR UN DOCUMENT D'IDENTITÉ ET PROCÉDÉ DE FABRICATION D'UN INSERT DE SÉCURITÉ POUR UN DOCUMENT D'IDENTITÉ

(30) Priorität: 26.04.2017 DE 102017004039; 19.03.2018 CN 201810226236
(43) Veröffentlichungstag der Anmeldung: 04.03.2020
(60) Teilanmeldung: 20193543.4
(73) Patentinhaber: Muehlbauer GmbH & Co. KG, 93426 Roding (DE)
(72) Erfinder: EDERER, Martin, 93483 Poesing (DE); HOECHERL, Franz, 94372 Rattiszell (DE); BRUNNER, Anton, 93444 Bad Koetzting (DE); BRANDL, Franz, 93455 Sattelpeilnstein Gemeinde Traitsching (DE); WANJEK, Michael, 93149 Nittenau (DE); MICHL, Thomas, 93491 Stamsried (DE)
(74) Vertreter: Schmidt, Steffen J.
(86) Internationale Anmeldenummer: PCT/EP2018/059814
(87) Internationale Veröffentlichungsnummer: WO 2018/197277

(56) Entgegenhaltungen:
- EP-A1- 2 998 127
- WO-A1-2011/020537
- WO-A1-2015/184556
- WO-A2-2005/062978
- DE-A1-102015 108 432

## Beschreibung

### Hintergrund

Hier wird eine Sicherheitseinlage für ein Ausweisdokument mit optisch erkennbaren Zeichen beschrieben. Solche Sicherheitseinlagen können beispielsweise in Reisepässen in Form eines Datenblatts oder in Werksausweisen, Führerscheinen, Personalausweisen, Sozialversicherungsausweisen sowie in Mitgliedsausweisen eingesetzt werden.

Die Sicherheitseinlage eignet sich sowohl für einen Einsatz im Rahmen eines Booklets, zum Beispiel eines Reisepasses, als auch für ein Ausweisdokument im Scheckkartenformat, zum Beispiel nach ISO/IEC 7810.

Solche Sicherheitseinlagen sind typischerweise in einer Draufsicht im Wesentlichen rechteckig und umfassen optisch erkennbare Zeichen wie zum Beispiel Personenfotos, Textfelder, Ausweisnummern, Hoheitszeichen und/oder Embleme.

Ziele der Verwendung von Sicherheitseinlagen sind die eindeutige Identifizierbarkeit, Haltbarkeit, Widerstandsfähigkeit und Fälschungssicherheit der Ausweisdokumente.

Zur Steigerung der Fälschungssicherheit können Sicherheitseinlagen für Ausweisdokumente mit sichtbaren Merkmalen versehen sein, deren Nachahmung schwierig oder zumindest aufwendig ist. Diese Merkmale dienen dazu, eine Fälschung der Ausweisdokumente zu erschweren und/oder echte Ausweisdokumente von gefälschten Ausweisdokumenten zu unterscheiden.

Weiter können Sicherheitseinlagen für Ausweisdokumente unsichtbare und/oder nur unter bestimmten Bedingungen, zum Beispiel unter der Bestrahlung von UV-Licht, sichtbare Sicherheitsmerkmale haben. Diese Merkmale dienen ebenfalls dazu, eine Fälschung der Ausweisdokumente zu erschweren und/oder echte Ausweisdokumente von gefälschten Ausweisdokumenten zu unterscheiden. So zeigt beispielsweise das deutsche Patent DE 10 2013 218 861 A1 ein Halbzeug für ein Sicherheitsdokument, welches unter UV-Anregung eine grafische Information erkennen lässt. Die grafische Information bietet jedoch ausschließlich unter UV-Anregung ein optisch erkennbares Sicherheitsmerkmal. Für Licht im sichtbaren Wellenlängenbereich ist die grafische Information transparent.

Das europäische Patent EP 2 004 415 B1 zeigt die Verwendung einer Lasergravur als nicht sichtbares Sicherheitsmerkmal für ein Ausweisdokument, wobei das Dokument jedoch irreversibel zerstört werden muss, um die Lasergravur freizulegen.

Aus der WO 2005/062978 A2 ist ein Identifikationsdokument mit optisch variablen personalisierten Daten bekannt. Das Dokument umfasst eine erste Schicht, auf der ein Sicherheitsmerkmal angeordnet ist und eine zweite Schicht, die mit der ersten Schicht verbunden ist. In der ersten Schicht sind Laser-Gravierungen ausgebildet.

Aus der WO 2015/184556 A1 ist ein Sicherheitselement mit einem zumindest teilweise transparenten mehrschichtigen Substrat bekannt, auf dem drei, sich zumindest teilweise überlappende Bilder angeordnet sind. Eine der Schichten kann ein Fenster aufweisen, in dem zwei der Bilder angeordnet sind.

Aus der WO 2011/020537 A1 ist eine Ausweiskarte mit einem Polymer-Träger und einer darauf angeordneten transparenten Kunststoff-Folie bekannt. Auf der Kunststoff-Folie ist ein Farbbild aufgedruckt und in die Kunststoff-Folie ist mit Hilfe eines Laserstrahls ein Graustufenbild eingebrannt. Dabei überlagern sich das Farbbild und das Graustufenbild. Das Farbbild ist für Infrarotstrahlung durchlässig. Zum Schutz des Farbbilds ist ein durchsichtiges Laminat vorgesehen.

### Aufgabe

Trotz vorhandener Lösungen besteht weiter Bedarf an einer verbesserten Sicherheitseinlage für ein Ausweisdokument zur Vermeidung der beschriebenen Nachteile.

Es ist daher die Aufgabe, eine verbesserte Sicherheitseinlage für ein Ausweisdokument und ein Verfahren zur Herstellung einer verbesserten Sicherheitseinlage für ein Ausweisdokument bereitzustellen. Eine unbefugte Reproduktion der Sicherheitseinlage durch Dritte soll erschwert werden und das Ausweisdokument soll durch optisch erkennbare Zeichen auf seine Integrität hin zerstörungsfrei überprüfbar sein.

### Lösung

Diese Aufgabe löst eine Vorrichtung nach dem Anspruch 1, ein korrespondierendes Herstellungsverfahren nach dem Anspruch 14 sowie eine Herstellungsvorrichtung nach dem Anspruch 17. Vorteilhafte Ausgestaltungen werden durch die abhängigen Ansprüche definiert. Die Patentansprüche definieren die Erfindung.

Eine Sicherheitseinlage mit optisch erkennbaren Zeichen für ein Ausweisdokument umfasst eine erste transparente Schicht und eine zweite transparente Schicht. Auf der ersten transparenten Schicht befindet sich ein Farbauftrag. Der Farbauftrag ist für infrarotes Licht transparent. Die erste transparente Schicht und die zweite transparente Schicht sind miteinander verbunden. Zumindest eine der transparenten Schichten weist Schwärzungen auf. Ein erster Teil der optisch erkennbaren Zeichen ist durch die Schwärzungen in zumindest einer der Schichten gebildet. Ein zweiter Teil der optisch erkennbaren Zeichen ist durch den Farbauftrag gebildet. Der erste und der zweite Teil der optisch erkennbaren Zeichen sind dazu angeordnet und ausgebildet sichtbares Licht zu reflektieren. Infrarotes Licht wird durch den ersten Teil der optischen Zeichen reflektiert.

Die Sicherheitseinlage weist weiterhin eine Lackschicht auf, welche auf der ersten transparenten Schicht und/oder auf dem Farbauftrag aufgetragen ist. Die Lackschicht ist für sichtbares Licht und/oder infrarotes Licht und/oder UV-Licht transparent.

Die erste Schicht der Sicherheitseinlage hat eine Vertiefung, wobei sich der Farbauftrag zumindest teilweise im Bereich der Vertiefung auf der ersten Schicht befindet und wobei die Vertiefung mit der Lackschicht ausgefüllt ist, sodass zumindest ein Teil des Farbauftrags von der ersten Schicht und der Lackschicht umschlossen ist.

Die Sicherheitseinlage zeigt somit während der Bestrahlung mit sichtbarem Licht eine erste grafische Information, welche durch den ersten Teil der optisch erkennbaren Zeichen und den zweiten Teil der optisch erkennbaren Zeichen gemeinsam gebildet ist. Unter Bestrahlung mit infrarotem Licht zeigt die Sicherheitseinlage eine zweite grafische Information welche durch den ersten Teil der optischen Zeichen gebildet ist.

Die erste grafische Information und die zweite grafische Information können identische oder voneinander verschiedene grafische Information sein.

In einem ersten Beispiel kann ein erstes Bild durch den Farbauftrag auf der ersten transparenten Schicht dargestellt sein, sodass dieses Bild während der Bestrahlung mit sichtbarem Licht optisch erkennbar ist. Gleichzeitig kann ein zweites Bild, welches insbesondere ein vom ersten Bild verschiedenes Bild ist, durch Schwärzungen in zumindest einer der Schichten dargestellt sein. Dieses zweite Bild kann durch das erste Bild verdeckt sein, sodass es während der Bestrahlung mit sichtbarem Licht nicht optisch erkennbar ist. Im Gegenzug kann die Sicherheitseinlage während der Bestrahlung mit infrarotem Licht ausschließlich das zweite Bild zeigen. Statt des zweiten Bildes oder zusätzlich zu dem zweiten Bild kann zum Beispiel auch eine Textinformation durch die Schwärzungen in zumindest einer der Schichten dargestellt sein.

In einem zweiten Beispiel kann ein erstes Bild durch den Farbauftrag auf der ersten transparenten Schicht dargestellt sein und ein zweites Bild durch Schwärzungen in zumindest einer der Schichten dargestellt sein, ohne dass das erste Bild das zweite Bild verdeckt. Während der Bestrahlung mit sichtbarem Licht sind somit das erste und das zweite Bild sichtbar und während der Bestrahlung mit Infrarotlicht ist ausschließlich das zweite Bild sichtbar.

In einem dritten Beispiel kann ein erstes Bild durch den Farbauftrag auf der ersten transparenten Schicht dargestellt sein und ein zweites Bild kann durch Schwärzungen in zumindest einer der Schichten dargestellt sein, wobei sich das erste und das zweite Bild aus der Perspektive eines Betrachters zumindest teilweise überschneiden. Beispielsweise können die Schwarzanteile eines Gesamtbildes durch die Schwärzungen in zumindest einer der Schichten gebildet sein, während die Farbanteile eines Bildes durch den Farbauftrag gebildet sind, sodass während der Bestrahlung mit sichtbarem Licht das Gesamtbild sichtbar ist und während der Bestrahlung mit infrarotem Licht nur ein Teilbild sichtbar ist.

In einem vierten Beispiel kann ein Text oder ein Bild zu einem ersten Teil durch den Farbauftrag, insbesondere durch einen für Infrarotlicht transparenten schwarzen oder buntschwarzen Farbauftrag dargestellt sein, während ein zweiter Teil des Textes oder des Bildes durch die Schwärzungen in zumindest einer der transparenten Schichten dargestellt ist, sodass während der Bestrahlung der Sicherheitseinlage mit sichtbarem Licht der gesamte Text bzw. das Gesamtbild sichtbar ist und während der Bestrahlung der Sicherheitseinlage mit infraroten Licht nur ein Teil des Textes oder Bildes sichtbar ist.

In einem fünften Beispiel kann ein Text, welcher zum Beispiel Informationen über den Inhaber der Sicherheitseinlage beinhaltet, durch Auslassungen in den Schwärzungen in zumindest einer der transparenten Schichten dargestellt sein. Mit anderen Worten weist zumindest eine der transparenten Schichten Schwärzungen auf, welche Auslassungen insbesondere in Form von Buchstaben oder anderen Zeichen haben, sodass während der Bestrahlung der Sicherheitseinlage mit Infrarotlicht die Buchstaben dadurch erkennbar sind, dass die Schwärzungen infrarotes Licht reflektieren, die Auslassungen in Form der Buchstaben oder anderen Zeichen jedoch kein infrarotes Licht reflektieren. Mit anderen Worten zeigen die Schwärzungen während der Bestrahlung mit Infrarotlicht ein Negativbild. Die Auslassungen und/oder die sie umgebenden Schwärzungen können aus der Perspektive eines Betrachters durch einen Farbaufdruck, zum Beispiel mit einem für Infrarotlicht transparenten buntschwarzen Farbaufdruck, so verdeckt sein, dass sie ausschließlich unter Infrarotlicht sichtbar sind.

Ein Vorteil einer solchen Sicherheitseinlage besteht darin, dass die Fälschungssicherheit erhöht wird und gleichzeitig eine Überprüfung der Echtheit der Sicherheitseinlage durch ein einfaches Bestrahlen mit Infrarotlicht möglich ist. Insbesondere dadurch, dass farblich schwarze Anteile der optischen Zeichen sowohl durch Schwärzungen in zumindest einer transparenten Schicht, als auch durch schwarze, insbesondere buntschwarze, Anteile des Farbauftrags gebildet werden können, wird das Erstellen einer, insbesondere unter infrarotem Licht, nicht als Fälschung erkennbaren Kopie der Sicherheitseinlage durch unbefugte Dritte erheblich erschwert.

Der Farbauftrag kann Farbanteile aus den Ausgangsfarben Cyan, Magenta und Yellow umfassen.

Der Farbauftrag kann mittels eines Tintenstrahldrucks auf die erste transparente Schicht aufgebracht sein.

Ein Vorteil der Verwendung der Farbanteile aus Cyan, Magenta und Yellow ist es, dass in einer Variante auf die Verwendung schwarzer Farbanteile zur Herstellung des Farbauftrags zumindest teilweise verzichtet werden kann, ohne dass hierdurch das zur Verfügung stehende Farbspektrum eingeschränkt wird. Jene Schwarzanteile eines Gesamtbildes, welche in als Stand der Technik bekannten Druckverfahren (Cyan-Magenta-Yellow-Schwarz-Druckverfahren, CMYK- Druckverfahren, gemäß ISO 2846) zur Erstellung eines Echtfarb-Gesamtbildes benötigt werden, können durch die Schwärzungen in zumindest einer der Schichten gebildet sein. Hierdurch kann zumindest teilweise auf die Verwendung schwarzer Farbanteile im Farbauftrag verzichtet werden.

Weiter kann durch Kombination der Farbanteile aus Cyan, Magenta und Yellow ein buntschwarzer Farbauftrag gebildet werden, welcher insbesondere für infrarotes Licht transparent ist.

Zumindest eine der transparenten Schichten kann zumindest teilweise durch die Einwirkung wenigstens eines Strahls aus Laserlichts zu schwärzen sein. Hierzu können die transparenten Schichten Additive, insbesondere carbon-basierende Additive, beinhalten. Durch die Einwirkung eines Strahls aus Laserlicht lassen sich so gezielt Schwärzungen, insbesondere Verkohlungen, in einer gewünschten Intensität erstellen.

Ein Vorteil der Verwendung solcher Schwärzungen in einer Sicherheitseinlage für ein Ausweisdokument besteht darin, dass ein unbefugter Dritter, welcher eine Fälschung einer solchen Sicherheitseinlage beabsichtigt, nicht oder nur schwer feststellen kann in welcher Schicht sich eine konkrete Schwärzung befindet, ohne die Sicherheitseinlage zu zerstören. Zudem können die Schwärzungen insbesondere unter Bestrahlung von Infrarotlicht andere Reflexionseigenschaften haben als der Farbauftrag und tragen somit weiter zur Fälschungssicherheit und zur Überprüfbarkeit der Integrität der Sicherheitseinlage bei. Die Verwendung von Laserstrahlen ermöglicht ein präzises und zeiteffizientes Erstellen der Schwärzungen.

In einer Variante kann die Sicherheitseinlage einen ersten UV-Farbauftrag umfassen, welcher sich auf der ersten Schicht und/oder auf dem Farbauftrag befindet. Der erste UV-Farbauftrag reflektiert zumindest UV-Licht in einem ersten Wellenlängenbereich. Ein dritter Teil der optisch erkennbaren Zeichen kann durch den ersten UV-Farbauftrag gebildet sein.

In einer weiteren Variante kann die Sicherheitseinlage weiter einen auf die erste Schicht und/oder auf dem Farbauftrag und/oder auf dem ersten UV-Farbauftrag befindlichen zweiten UV-Farbauftrag umfassen. Der zweite UV-Farbauftrag reflektiert zumindest UV-Licht in einem zweiten Wellenlängenbereich. Ein vierter Teil der optisch erkennbaren Zeichen kann durch den zweiten UV-Farbauftrag gebildet sein.

Der dritte und/oder der vierte Teil der optisch erkennbaren Zeichen kann die gleiche grafische Information wie der erste und/oder der zweite Teil der optisch erkennbaren Zeichen und/oder eine vom ersten und/oder zweiten Teil der optisch erkennbaren Zeichen abweichende grafische Information zeigen. Zum Beispiel kann ein Gesichtsbild eines Inhabers der Sicherheitseinlage gezeigt werden.

Der erste UV-Farbauftrag und/oder der zweite UV-Farbauftrag können für sichtbares Licht und/oder infrarotes Licht transparent sein.

Der erste UV-Farbauftrag und/oder der zweite UV-Farbauftrag können in einer Variante mehrfarbige UV-Farbaufträge sein. Insbesondere können die UV-Farbaufträge Farbanteile aus Rot, Grün, Blau und Weiß (RGBW) oder aus Cyan, Magenta, Yellow und/oder schwarz (CMYK) aufweisen, welche jeweils UV-Licht reflektieren. Die Verwendung weiterer Farbanteile für den ersten und/oder für den zweiten UV-Farbauftrag ist in einer Weiterentwicklung möglich.

Der erste UV-Farbauftrag und/oder der zweite UV-Farbauftrag können dazu angeordnet und ausgebildet sein, einem Betrachter der Sicherheitseinlage während der Bestrahlung der Sicherheitseinlage mit UV-Licht eine mehrfarbige grafische Information zu zeigen, zum Beispiel ein Gesichtsbild des Ausweisinhabers, welches insbesondere während der Bestrahlung der Sicherheitseinlage mit ausschließlich sichtbarem Licht für den Betrachter nicht zu erkennen ist.

Der erste und/oder der zweite UV-Farbauftrag können in einer Variante bi-fluoreszierend sein. Insbesondere kann der erste UV-Farbauftrag dem Betrachter der Sicherheitseinlage während der Bestrahlung der Sicherheitseinlage mit UV-Licht einer ersten Wellenlänge einen ersten Farbeindruck vermitteln und während der Bestrahlung der Sicherheitseinlage mit UV-Licht einer dritten Wellenlänge einen zweiten Farbeindruck vermitteln. Weiter kann der zweite UV-Farbauftrag dem Betrachter der Sicherheitseinlage während der Bestrahlung der Sicherheitseinlage mit UV-Licht einer zweiten Wellenlänge einen dritten Farbeindruck vermitteln und während der Bestrahlung der Sicherheitseinlage mit UV-Licht einer vierten Wellenlänge einen vierten Farbeindruck vermitteln. Der erste, zweite, dritte und vierte Farbeindruck können jeweils voneinander verschieden oder zumindest teilweise identisch sein.

Zum Beispiel kann der erste UV-Farbauftrag dem Betrachter der Sicherheitseinlage während der Bestrahlung der Sicherheitseinlage mit UV-Licht einer ersten Wellenlänge von vorzugsweise 365 nm einen Farbeindruck aus den Farbanteilen Rot, Grün, Blau und Weiß vermitteln und während einer Bestrahlung der Sicherheitseinlage mit UV-Licht einer dritten Wellenlänge von vorzugsweise 254 nm einen Farbeindruck aus den Farbanteilen Grün und Rot vermitteln.

In einem anderen Beispiel kann der zweite UV-Farbauftrag dem Betrachter der Sicherheitseinlage während der Bestrahlung der Sicherheitseinlage mit UV-Licht einer zweiten Wellenlänge von vorzugsweise 365 nm einen blauen Farbeindruck vermitteln und während einer Bestrahlung der Sicherheitseinlage mit UV-Licht einer vierten Wellenlänge von vorzugsweise 313 nm einen roten Farbeindruck vermitteln.

Ein Vorteil des ersten UV-Farbauftrags und/oder des zweiten UV Farbauftrags besteht darin, dass der Sicherheitseinlage durch die Erstellung eines dritten und/oder vierten Teils der optischen Zeichen weitere Sicherheitsmerkmale hinzugefügt werden können, welche unter der Bestrahlung der Sicherheitseinlage mit UV-Licht sichtbar werden. Werden sowohl ein erster UV-Farbauftrag als auch ein zweiter UV-Farbauftrag verwendet, welche in jeweils unterschiedlichen Wellenlängenbereichen UV-Licht reflektieren, so ermöglicht dies eine weitere Erhöhung der Fälschungssicherheit der Sicherheitseinlage, insbesondere da eine Replikation der Sicherheitseinlage weiter erschwert wird.

In einer Ausführungsform kann die Sicherheitseinlage weiter eine transparente Abdeckschicht aus Polycarbonat, Polyethylenterephthalat oder Polyethylenterephthalat-Glycol umfassen.

Ein Vorteil der Abdeckschicht ist der Schutz der Sicherheitseinlage vor negativen Umwelteinflüssen wie zum Beispiel dem Eindringen von Feuchtigkeit oder dem Schutz vor mechanischen Beschädigungen wie zum Beispiel einem Zerkratzen der Sicherheitseinlage.

Weiter weist die hier beschriebene Sicherheitseinlage eine Lackschicht auf, welche auf der ersten transparenten Schicht und/oder auf dem Farbauftrag aufgetragen ist. Weist die Sicherheitseinlage zusätzlich einen ersten und/oder zweiten UV-Farbauftrag auf, kann die Lackschicht auch auf dem ersten und/oder zweiten UV-Farbauftrag aufgetragen sein. Zum Beispiel kann die Lackschicht eine Oberfläche der ersten transparenten Schicht und einen darauf befindlichen Farbauftrag vollständig bedecken oder, in einem anderen Beispiel, lediglich einen auf der ersten transparenten Schicht befindlichen Farbauftrag und/oder den ersten UV-Farbauftrag und/oder den zweiten UV-Farbauftrag bedecken. In einer Weiterbildung kann die Lackschicht den auf der ersten transparenten Schicht befindlichen Farbauftrag und/oder den ersten UV-Farbauftrag und/oder den zweiten UV-Farbauftrag und einen Teil der ersten transparenten Schicht bedecken. Zum Beispiel kann die durch die Lackschicht abgedeckte Fläche 5 bis 20 Prozent größer sein, als die Fläche des auf der ersten transparenten Schicht befindlichen Farbauftrags und/oder des ersten UV-Farbauftrags und/oder des zweiten UV-Farbauftrags.

Der Farbauftrag und/oder der erste UV-Farbauftrag und/oder der zweite UV-Farbauftrag können von der Lackschicht und der ersten transparenten Schicht vollständig eingeschlossen/umschlossen sein, sodass die Lackschicht und die erste transparente Schicht den Farbauftrag und/oder den ersten UV-Farbauftrag und/oder den zweiten UV-Farbauftrag im Zusammenwirken vollständig umgeben.

Die Lackschicht ist für sichtbares Licht und/oder infrarotes Licht und/oder UV-Licht transparent. Die Lackschicht kann ein Fertigungsmaterial aufweisen, welches gleich einem Fertigungsmaterial der ersten transparenten Schicht ist. Zumindest ein Teil der Lackschicht kann ein Fertigungsmaterial aus (Meth-)acrylat, Polyesterarcylat oder Urethanacrylat aufweisen. Ferner kann ein Fertigungsmaterial der Lackschicht insbesondere ein thermisch- und/oder UV-aushärtbares Fertigungsmaterial sein.

Die Lackschicht kann eine Dicke von weniger als 100 µm, zum Beispiel eine Dicke von 12µm bis 80µm, haben. Insbesondere kann die Lackschicht eine Dicke von 30µm bis 80µm haben. Ferner kann die Lackschicht durch einen Tintenstrahldrucker auf die erste transparente Schicht auftragbar sein. Die Temperaturbeständigkeit der Lackschicht kann größer sein, als die Temperaturbeständigkeit einer der transparenten Schichten. Insbesondere kann die Temperaturbeständigkeit der Lackschicht größer sein, als die Temperaturbeständigkeit der ersten transparenten Schicht.

Die Lackschicht kann optional in Form eines Rechtecks, eines Sterns oder mit der Kontur eines Hoheitszeichens oder Wappens auf die erste transparente Schicht aufgetragen werden. In einer Variante kann die Lackschicht mit der Kontur eines Gesichtsbilds kongruent oder gegenüber dem Gesichtsbild vergrößert auf die erste transparente Schicht aufgetragen werden.

Ein Vorteil der Lackschicht ist, dass sie nicht oder nur schwer von der ersten transparenten Schicht zu entfernen ist und somit die Fälschungssicherheit der Sicherheitseinlage verbessert. Zudem kann die Lackschicht die erste transparente Schicht vor Verkratzungen und/oder vor einem Abrieb schützen.

Weiter kann die Sicherheitseinlage eine dritte, insbesondere durch Laserlicht zu schwärzende, transparente Schicht und/oder eine vierte, insbesondere durch Laserlicht zu schwärzende, transparente Schicht umfassen.

Ein Vorteil von weiteren, insbesondere durch Laserlicht zu schwärzenden, transparenten Schichten ist eine weitere Erhöhung der Fälschungssicherheit. Eine aus der Perspektive eines Betrachters wahrgenommene Gesamtheit von optisch erkennbaren Zeichen kann so auf eine Mehrzahl von transparenten Schichten sowie einen Farbauftrag und/oder eine Mehrzahl von UV-Farbaufträgen disloziert werden.

Zumindest eine der transparenten Schichten kann gegenüber einer anderen transparenten Schicht eine vergrößerte Grundfläche haben, wobei unter Grundfläche die Abmessungen der Sicherheitseinlage bzw. einzelnen transparenten Schichten aus Sicht eines Betrachters der Sicherheitseinlage zu verstehen ist. Die vergrößerte Grundfläche der zumindest einen transparenten Schicht kann vorteilhafter Weise zur Verbindung der Sicherheitseinlage mit einem Booklet, insbesondere einem Reisepass, dienen. Hierbei kann jener Teil der zumindest einen transparenten Schicht, der gegenüber einer anderen transparenten Schicht vergrößert ist, zum Befestigen der Sicherheitseinlage in dem Booklet genutzt werden.

Ein erster Hintergrundfarbauftrag kann sich auf der zweiten Schicht befinden. Ein zweiter Hintergrundfarbauftrag kann sich auf der vierten Schicht befinden.

Ein Vorteil der Verwendung von Hintergrundfarbaufträgen ist ein effizient zu fertigender Beitrag zur optisch wahrnehmbaren Gesamtinformation der Sicherheitseinlage. Sowohl der erste wie auf der zweite Hintergrundfarbauftrag können Sicherheitsmerkmale enthalten, welche die Fälschungssicherheit der Sicherheitseinlage weiter erhöhen.

Der erste und/oder der zweite Hintergrundfarbauftrag können durch ein Offsetdruckverfahren erstellt werden.

Weiter kann die Sicherheitseinlage ein Inlay umfassen, welches zumindest eine erste, insbesondere opake und/oder optisch aktive, Inlayschicht hat. Das Inlay kann sich zum Beispiel zwischen der zweiten und der dritten transparenten Schicht befinden.

In einer Variante kann sich das Inlay in einer Ausnehmung der zweiten und/oder der dritten transparenten Schicht befinden.

Das Inlay kann in einer Ausführungsform eine zweite, insbesondere opake und/oder optisch aktive, Inlayschicht umfassen. Eine Anordnung elektronischer Bauteile, insbesondere Antennenmodule und/oder RFID-Chips, können sich zwischen der ersten und der zweiten Inlayschicht befinden. Ausführungsformen mit weiteren Inlayschichten sind möglich.

Ein Vorteil der Verwendung eines Antennenmoduls und/oder eines RFID-Chips sind die weitere Erhöhung der Fälschungssicherheit sowie der Überprüfbarkeit der Integrität der Sicherheitseinlage durch elektronische Auslesevorrichtungen für RFID-Chips, welche als Stand der Technik bekannt sind.

Zumindest eine der Schichten kann ein Hologrammelement umfassen, welches für einen Betrachter der Sicherheitseinlage sichtbar ist und einen visuell-holographischen Effekt hat. Der visuell-holographische Effekt kann sowohl unter sichtbarem wie auch unter unsichtbarem Licht, insbesondere unter infrarotem oder ultraviolettem Licht, optisch erkennbar sein.

In einer Variante kann das Hologrammelement für UV-Licht transparent sein.

Das Hologrammelement kann sich, zumindest aus der Perspektive eines Betrachters, mit einem Teil der optisch erkennbaren Zeichen zumindest teilweise überlagern.

In einer Weiterentwicklung kann das Hologrammelement auch zwischen den transparenten Schichten oder zwischen einer transparenten Schicht und dem Inlay angeordnet sein. Insbesondere kann das Hologrammelement zwischen der ersten transparenten Schicht und der zweiten transparenten Schicht oder zwischen der zweiten transparenten Schicht und dem Inlay angeordnet sein.

Ein Vorteil der Verwendung eines Hologrammelements ist die weitere Erhöhung der Fälschungssicherheit sowie der Überprüfbarkeit der Integrität der Sicherheitseinlage.

Die transparenten Schichten und/oder das Inlay und/oder die Abdeckschicht können durch eine Lamination miteinander verbunden sein.

Ein Vorteil einer Lamination der zumindest zwei transparenten Schichten ist es, dass ein zerstörungsfreies Trennen der Schichten voneinander, zum Beispiel zur Herstellung einer Fälschung der Sicherheitseinlage durch einen unbefugten Dritten, erschwert wird.

Zumindest eine transparente Schicht der Sicherheitseinlage kann aus Polycarbonat oder Polyethylenterephthalat gefertigt sein. In einer Variante kann die Sicherheitseinlage vollständig aus Polycarbonat oder Polyethylenterephthalat gefertigt sein.

Vorteile der Fertigung der Sicherheitseinlage aus Polycarbonat oder Polyethylenterephthalat ergeben sich zum Beispiel aus der Widerstandsfähigkeit, der Leichtigkeit und der Flexibilität der Materialien.

Der Farbauftrag und/oder der erste UV-Farbauftrag und/oder der zweite UV-Farbauftrag und/oder der erste Hintergrundfarbauftrag und/oder der zweite Hintergrundfarbauftrag können aus lösungsmittelhaltigen, insbesondere pigmentbasierten, Tinten gebildet sein. Die lösungsmittelhaltigen, insbesondere pigmentbasierten, Tinten können dazu geeignet sein, während eines Auftrageprozesses eine Oberfläche aus Polycarbonat oder Polyethylenterephthalat an zu lösen und zumindest teilweise zu penetrieren.

Ein Vorteil der Verwendung solcher lösungsmittelhaltigen Tinten zur Bildung des Farbauftrags oder der Hintergrundfarbaufträge besteht in einer Erhöhung der Fälschungssicherheit der Sicherheitseinlagen. So ist zum Beispiel eine Entfernung des Farbauftrags von der ersten transparenten Schicht, zum Beispiel zum Zwecke des Ersetzens des ersten Farbauftrags durch einen unbefugten Dritten, erschwert.

Der Farbauftrag und/oder der erste UV-Farbauftrag und/oder der zweite UV-Farbauftrag und/oder der erste Hintergrundfarbauftrag und/oder der zweite Hintergrundfarbauftrag können forensische Marker, insbesondere Silizium, Siliziumdioxid, Glimmer, Titanoxid und/oder Zinnoxid enthalten.

Ein Vorteil der Verwendung solcher forensischen Marker besteht in der Überprüfbarkeit der Integrität einer Sicherheitseinlage. Obwohl solche forensischen Marker typischerweise nicht mit bloßem Auge zu erkennen sind, kann durch eine gezielte Untersuchung der Sicherheitseinlage anhand der forensischen Marker bestimmt werden, ob es sich um ein Originaldokument oder eine Fälschung handelt.

Die erste transparente Schicht der Sicherheitseinlage hat eine Vertiefung. Der Farbauftrag befindet sich zumindest teilweise in der Vertiefung. Optional können sich weiter der erste UV-Farbauftrag und/oder der zweite UV-Farbauftrag zumindest teilweise im Bereich der Vertiefung der ersten transparenten Schicht befinden.

Die Vertiefung der ersten transparenten Schicht ist mit der Lackschicht ausgefüllt, sodass zumindest ein Teil des Farbauftrags von der ersten Schicht und der Lackschicht umschlossen ist.

Die Lackschicht und/oder zumindest eine der transparenten Schichten kann/können in einer Ausführungsform einen Zusatz aufweisen, welcher UV-Licht in einem ersten und/oder in einem zweiten Wellenlängenbereich reflektiert.

Zum Beispiel können die Lackschicht und/oder die transparente Abdeckschicht und/oder zumindest eine der transparenten Schichten nanoskalige Luminophore aufweist, welche dazu ausgebildet sind, UV-Licht einer vorbestimmten Wellenlänge zu reflektieren. In einem Beispiel können die nanoskalige Luminophore, welche in der Lackschicht der Sicherheitseinlage eingebracht sind, UV-Licht einer vorbestimmenden Wellenlänge reflektieren, sodass bei der Beleuchtung der Sicherheitseinlage mit UV-Licht der vorbestimmenden Wellenlänge ein Teil des Farbauftrages und/oder des ersten UV-Farbauftrags und/oder des zweiten UV-Farbauftrags für einen Betrachter der Sicherheitseinlage verdeckt werden.

In einer Ausführungsform kann die Vertiefung so mit der Lackschicht ausgefüllt sein, dass dieses bündig mit der Oberfläche der ersten transparenten Schicht abschließt, sodass sich eine plane Gesamtoberfläche ohne erhabene und/oder vertiefte Abschnitte ergibt.

Ein Vorteil einer Vertiefung, in welcher der Farbauftrag und optional der erste UV-Farbauftrag und/oder der zweite UV-Farbauftrag zumindest teilweise von der ersten Schicht und einer Lackschicht umschlossen sind, besteht in einer Erhöhung der Fälschungssicherheit, da ein zerstörungsfreies Entfernen oder Replizieren des Farbauftrags und optional des ersten UV-Farbauftrags und/oder des zweiten UV-Farbauftrags durch einen unbefugten Dritten, zum Beispiel zum Zwecke einer Fälschung der Sicherheitseinlage, erheblich erschwert wird.

Ein Verfahren zum Herstellen einer Sicherheitseinlage mit optisch erkennbaren Zeichen für ein Ausweisdokument umfasst die Schritte:
- Bereitstellen einer ersten transparenten Schicht,
- Bereitstellen einer zweiten transparenten Schicht,
- Erstellen eines ersten Teils der optisch erkennbaren Zeichen durch Schwärzungen in zumindest einer Schicht mittels eines Strahls aus Laserlicht,
- Erstellen eines zweiten Teils der optisch erkennbaren Zeichen durch Auftragen eines Farbauftrags auf die erste Schicht,
- Erstellen einer Vertiefung in der ersten Schicht, insbesondere durch Eindrücken und/oder Prägen und/oder Fräsen,
- Auffüllen der Vertiefung mit einer Lackschicht und.
- Auftragen der Lackschicht auf die erste transparente Schicht, während der Farbauftrag noch nicht vollständig getrocknet oder ausgehärtet ist.

Die Ausführungsreihenfolge der Schritte ist hierbei nicht festgelegt. Insbesondere kann in einem Ausführungsbeispiel zuerst der zweite Teil der optisch erkennbaren Zeichen und daran anschließend der erste Teil der optisch erkennbaren Zeichen erstellt werden.

In einer Variante umfasst das Verfahren zum Herstellen einer Sicherheitseinlage mit optisch erkennbaren Zeichen für ein Ausweisdokument weiter zumindest einen der Schritte:
- Bereitstellen einer Abdeckschicht,
- Verbinden zumindest einer der transparenten Schichten mit der Abdeckschicht,
- Erstellen eines dritten Teils der optisch erkennbaren Zeichen durch Auftragen eines ersten UV-Farbauftrags auf die erste Schicht und/oder auf den Farbauftrag, welcher zumindest UV-Licht in einem ersten Wellenlängenbereich reflektiert,
- Erstellen eines vierten Teils der optisch erkennbaren Zeichen durch Auftragen eines zweiten UV-Farbauftrags auf die erste Schicht und/oder auf den Farbauftrag und/oder auf den ersten UV-Farbauftrag, welcher zumindest UV-Licht in einem zweiten Wellenlängenbereich reflektiert.

Das Verbinden der Schichten kann durch ein Laminationsverfahren geschehen.

Zum Erstellen des Farbauftrags und/oder des ersten UV- Farbauftrags und/oder des zweiten UV-Farbauftrags können solche lösungsmittelhaltigen insbesondere pigmentbasierten Tinten verwendet werden, die eine Oberfläche der ersten Schicht, welche insbesondere aus Polycarbonat oder Polyethylenterephthalat gefertigt ist, anlösen und zumindest teilweise penetrieren.

Die Lackschicht wird auf die erste transparente Schicht aufgetragen, während der Farbauftrag, optional auch während der erste UV-Farbauftrag und/oder der zweite UV-Farbauftrag, noch nicht vollständig getrocknet/ausgehärtet ist/sind. Ein Vorteil hierbei ist eine verbesserte Haftung bzw. Verbindung zwischen den (UV-)Farbaufträgen und der Lackschicht, sodass ein zerstörungsfreies Lösen der Lackschicht von der ersten transparenten Schicht mit den Farbaufträgen weiter erschwert wird. Hierdurch kann die Sicherheit der Einlage weiter verbessert werden.

Weiter offenbart ist eine Vorrichtung zur Herstellung einer Sicherheitseinlagemit optisch erkennbaren Zeichen für ein Ausweisdokument, wobei die herzustellende Sicherheitseinlage folgendes umfasst:
- eine erste transparente Schicht, die eine Vertiefung aufweist, und
- einen auf der ersten Schicht befindlichen Farbauftrag, wobei sich der Farbauftrag zumindest teilweise im Bereich der Vertiefung auf der ersten Schicht befindet, und
- eine zweite transparente Schicht, wobei die erste und die zweite Schicht miteinander verbunden sind, und wobei
- zumindest eine der Schichten Schwärzungen aufweist, und
- der Farbauftrag für Infrarotlicht transparent ist, und
- ein erster Teil der optisch erkennbaren Zeichen durch die Schwärzungen in zumindest einer der Schichten gebildet ist, und
   ein zweiter Teil der optisch erkennbaren Zeichen durch den Farbauftrag so gebildet ist, dass der erste und der zweite Teil der optisch erkennbaren Zeichen sichtbares Licht reflektieren und der erste Teil der optisch en Zeichen infrarotes Licht reflektiert, und
- die Vertiefung mit der Lackschicht ausgefüllt ist, so dass zumindest ein Teil des Farbauftrags von der ersten Schicht und der Lackschicht umschlossen ist.

Die Vorrichtung zur Herstellung dieser Sicherheitseinlage umfasst zumindest:
- eine Laservorrichtung, welche dazu angeordnet und ausgebildet ist, die Schwärzungen in einer ersten und/oder einer zweiten transparenten Schicht durch einen Strahl aus Laserlicht zu bewirken, und
- eine Tintenstrahldruckvorrichtung, welche dazu angeordnet und ausgebildet ist, den Farbauftrag auf die erste transparente Schicht aufzutragen, sodass sich der Farbauftrag zumindest teilweise im Bereich der Vertiefung auf der ersten Schicht befindet.

Weiter ist die Herstellungsvorrichtung durch eine Lackierungsvorrichtung gekennzeichnet, die dazu angeordnet und ausgebildet ist, eine Lackschicht auf die erste transparente Schicht aufzutragen, wobei die Lackierungsvorrichtung ferner dazu angeordnet und ausgebildet ist, die Vertiefung in der ersten transparenten Schicht mit der Lackschicht auszufüllen, sodass zumindest ein Teil des Farbauftrags von der ersten Schicht und der Lackschicht umschlossen ist.

Die Vorrichtung zum Herstellen einer Sicherheitseinlage für ein Ausweisdokument mit optisch erkennbaren Zeichen umfasst zudem optional eine Laminationsvorrichtung.

Die Laservorrichtung ist dazu ausgebildet und angeordnet, Schwärzungen zumindest in einer ersten und/oder zweiten transparenten Schicht durch einen Strahl aus Laserlicht zu bewirken.

Die Druckvorrichtung ist dazu ausgebildet und angeordnet einen Farbauftrag, und optional einen UV-Farbauftrag, auf die erste Schicht aufzutragen, welcher insbesondere für infrarotes Licht transparent ist. Die Lackiervorrichtung ist dazu ausgebildet ist, die Lackschicht auf die erste Schicht aufzutragen. Die optionale Laminationsvorrichtung ist dazu ausgebildet und angeordnet die Abdeckschicht mit der ersten transparenten Schicht zu verbinden.

Ein Vorteil der Vorrichtung zum Herstellen einer Sicherheitseinlage besteht darin, dass eine an sich fertige Sicherheitseinlage, zum Beispiel im Format ID 1 oder im Format ID 3, im Gegensatz zum Bedrucken im Bogenformat mit hoher Fälschungssicherheit personalisiert werden kann, indem sie bedruckt, gelasert und anschließend mit einer Lackschicht versehen wird.

### Kurzbeschreibung der Figuren

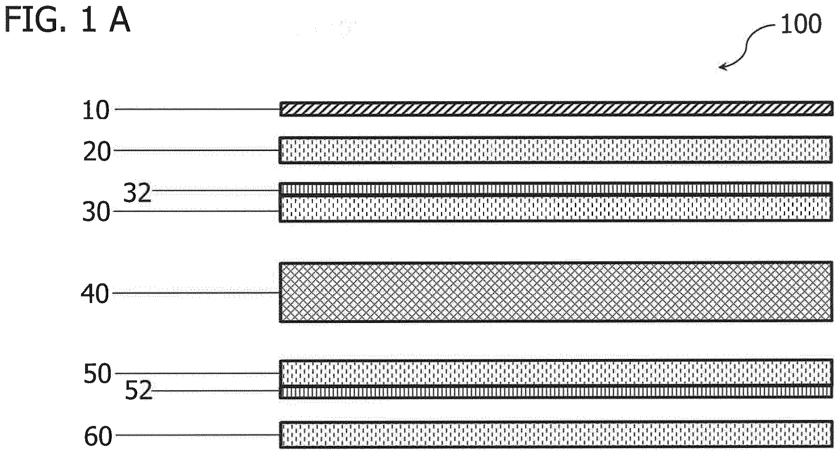

Die folgenden Figuren 1A bis 6 zeigen Gegenstände, die nicht erfindungsgemäß sind. Die Figuren 1A bis 6 dienen lediglich der Veranschaulichung einzelner Merkmale. Die Erfindung wird allein durch die Patentansprüche 1 bis 17 definiert.

Die Figuren zeigen schematisch und beispielhaft jeweils eine Sicherheitseinlage für ein Ausweisdokument mit optisch erkennbaren Zeichen oder einen Teil einer solchen Sicherheitseinlage. Die Abmessungen und Proportionen der in den Figuren gezeigten Komponenten sind nicht maßstäblich.
- Fig. 1A - 1B: zeigen schematisch und beispielhaft den Schichtaufbau einer Sicherheitseinlage für ein Ausweisdokument in einer Explosionsskizze.
- Fig. 2A - 2D: zeigen schematisch Beispiele für die Anordnung eines Farbauftrags auf einer ersten transparenten Schicht und für Schwärzungen in einer oder mehreren transparenten Schicht/en.
- Fig. 3A - 3C: zeigen Beispiele für Sicherheitseinlagen für Ausweisdokumente, welche einen ersten Teil optisch erkennbarer Zeichen und einen zweiten Teil optisch erkennbarer Zeichen aufweisen.
- Fig. 4A - 4F: zeigen Beispiele für Sicherheitseinlagen für Ausweisdokumente, welche eine Vertiefung in der ersten transparenten Schicht aufweisen.

- Fig. 5A - 5G: zeigen Beispiele für Sicherheitseinlagen für Ausweisdokumente, welche zumindest einen UV-Farbauftrag aufweisen.
- Fig. 6: zeigt ein Beispiel für eine Sicherheitseinlage für ein Ausweisdokument, welches einen ersten, zweiten, dritten und vierten Teil von optisch erkennbaren Zeichen sowie eine Vertiefung in der ersten transparenten Schicht aufweist.

### Detailbeschreibung der Figuren

Figur 1A zeigt beispielhaft einen Schichtaufbau für eine Sicherheitseinlage 100 für ein Ausweisdokument. Der Schichtaufbau kann zum Beispiel wie in Figur 1A gezeigt eine Abdeckschicht 10, eine erste transparente Schicht 20, eine zweite transparente Schicht 30, ein Inlay 40, eine dritte transparente Schicht 50 und eine vierte transparente Schicht 60 umfassen. Das Inlay 40 ist zwischen der zweiten transparenten Schicht 30 und der dritten transparenten Schicht 50 angeordnet, sodass es die zweite und die dritte transparente Schicht vollständig voneinander trennt und jeweils vollständig an den Oberflächen der zweiten transparenten Schicht 30 und der dritten transparenten Schicht 50 anliegt. Das Inlay 40 ist in dem in Figur 1A dargestellten Beispiel parallel zu den transparenten Schichten 20, 30, 50, 60 angeordnet.

In alternativen Ausführungsformen kann die Sicherheitseinlage ergänzend oder alternativ zu der in Figur 1A gezeigten Abdeckschicht 10 auch eine aufgedruckte Lackschicht umfassen (nicht gezeigt). Bei Ausführungsformen, welche statt einer Abdeckschicht 10 eine aufgedruckte Lackschicht aufweisen, ist die Lackschicht analog zur Abdeckschicht 10 angeordnet und übernimmt deren Schutzfunktion für die Oberfläche der Sicherheitseinlage.

Ein vorgefertigter erster Hintergrundfarbauftrag 32 und ein vorgefertigter zweiter Hintergrundfarbauftrag 52 befinden sich wie in Figur 1A dargestellt auf der zweiten transparenten Schicht 30 und der dritten transparenten Schicht 50. Der erste Hintergrundfarbauftrag 32 befindet sich auf der der Abdeckschicht 10 zugewandten Oberfläche der zweiten transparenten Schicht 30. Der zweite Hintergrund Farbauftrag 52 befindet sich auf der der Abdeckschicht 10 abgewandten Seite der dritten transparenten Schicht 50.

Der erste Hintergrundfarbauftrag 32 und der zweite Hintergrundfarbauftrag 52 sind durch einen Offsetdruck auf die zweite bzw. auf die dritte transparente Schicht 30, 50 aufgedruckt. Der Hintergrundfarbauftrag 32 ist somit zwischen dem Farbauftrag 22 und den Schwärzungen 34 angeordnet.

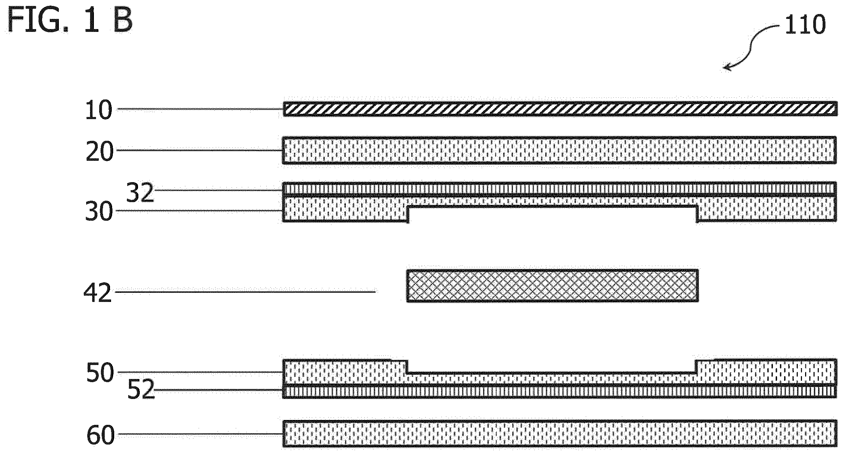

Figur 1B zeigt einen zu Figur 1A alternativen beispielhaften Schichtaufbau für eine Sicherheitseinlage 110 mit optisch erkennbaren Zeichen für ein Ausweisdokument. In der in Figur 1B gezeigten Ausführungsform ist das Inlay 42 dazu ausgebildet und angeordnet, in einer Vertiefung der zweiten transparenten Schicht 30 und einer Vertiefung der dritten transparenten Schicht 50 befindlich zu sein. Im Unterschied zu dem in Figur 1A gezeigten Beispiel hat das Inlay 42 in einem Querschnitt eine geringere Ausdehnung als die das Inlay umgreifenden transparenten Schichten.

Das Inlay 40,42 kann eine einzige oder eine Mehrzahl von optisch aktiven, insbesondere transparenten, Inlayschichten umfassen. Umfasst das Inlay 40,42 in einer Variante weiter ein Antennenmodul und/oder einen RFID-Chip (nicht gezeigt), muss das Inlay 40,42 mindestens zwei optisch aktive Inlayschichten aufweisen.

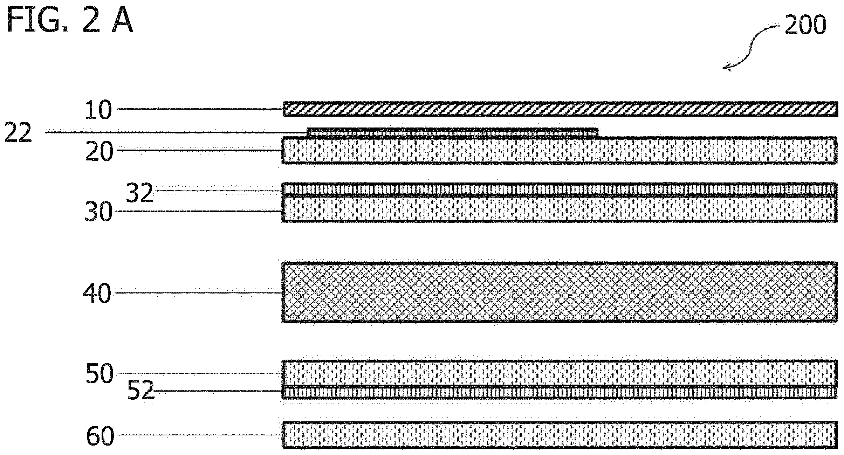

Figur 2A zeigt beispielhaft einen Schichtaufbau für eine Sicherheitseinlage 200 mit einem Farbauftrag 22. Der Farbauftrag 22 befindet sich auf der der Abdeckschicht 10 zugewandten Oberfläche der ersten transparenten Schicht 20. (Der Farbauftrag 22 ist in der schematischen Zeichnung deutlich überhöht dargestellt, um im Querschnitt sichtbar zu sein.) Die erste transparente Schicht 20 und der Farbauftrag 22 sind durch die Abdeckschicht 10 vor negativen Umwelteinflüssen, beispielsweise dem Eindringen von Feuchtigkeit oder mechanischen Beschädigungen wie Zerkratzen, geschützt.

Der Farbauftrag 22 ist durch einen Farbaufdruck aus den Basisfarben Cyan, Magenta und Yellow gebildet. Durch Kombination der Basisfarben kann auch ein sogenanntes Buntschwarz gebildet sein, welches durch ein überlagern der Basisfarben entsteht. In einer Variante kann der Farbauftrag 22 auch für Infrarotlicht transparente schwarze Farbanteile aufweisen.

Für einen Betrachter, welcher die aus mehreren Schichten aufgebaute Sicherheitseinlage 200 aus Richtung der Abdeckschicht 10 betrachtet ist der Farbauftrag 22 vor den Hintergrundfarbaufträgen 32 und 52 sichtbar.

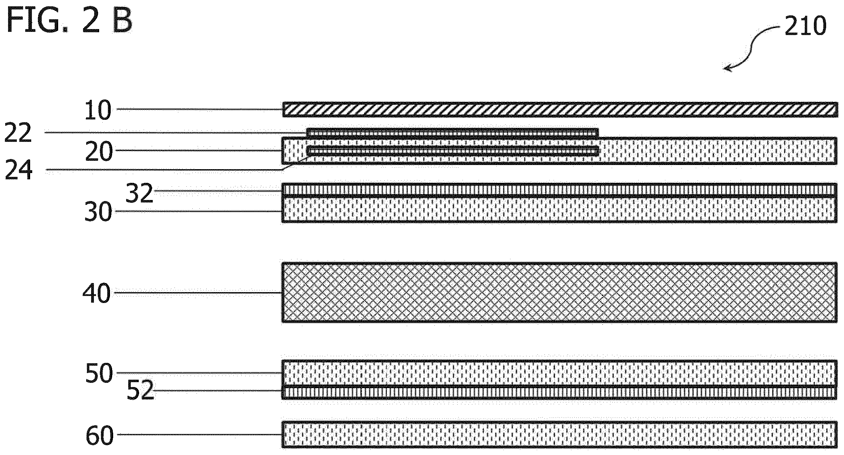

Figur 2B zeigt eine Sicherheitseinlage 210 für ein Ausweisdokument mit optisch erkennbaren Zeichen. Zusätzlich zum Farbauftrag 22 hat die dargestellte erste transparente Schicht 20 die Schwärzungen 24.

Die erste transparente Schicht 20, die zweite transparente Schicht 30, die dritte transparente Schicht 50 und die vierte transparente Schicht 60 sind aus einem Polycarbonatwerkstoff gefertigt und enthalten kohlenstoffhaltige Additive, welche unter der Einwirkung insbesondere von Laserlicht die Schwärzungen ausbilden. Die Schwärzung in können durch Regulierung der Intensität und der Einwirkungsdauer des Laserlichts in einer gewünschten Intensität ausgebildet werden.

Der Farbauftrag 22, welcher aus den Basisfarben Cyan, Magenta und Yellow gebildet ist, und die Schwärzungen 24 ergänzen einander, zumindest aus der Perspektive eines Betrachters, zu einem Gesamtbild. Die Schwarzanteile des Gesamtbildes werden hierbei durch die Schwärzung in 24 gebildet, sodass der Farbauftrag 22 keine Schwarzanteile enthalten muss.

In einer anderen Ausführungsform kann der Farbauftrag 22, zumindest aus der Perspektive des Betrachters, die Schwärzungen 24 der ersten transparenten Schicht 20 vollständig verdecken, sodass für den Betrachter ausschließlich der Farbauftrag 22 sichtbar ist. Zum Beispiel kann durch einen buntschwarzen Farbauftrag 22 eine Schwärzung 24 vollständig verdeckt werden.

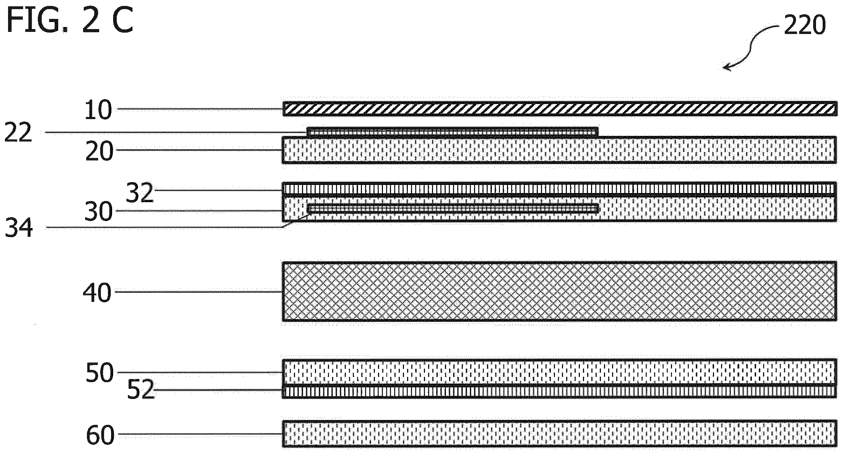

Figur 2C zeigt eine Sicherheitseinlage 220 für ein Ausweisdokument mit optisch erkennbaren Zeichen. Zusätzlich zum Farbauftrag 22 hat die dargestellte zweite transparente Schicht 30 die Schwärzungen 34.

Die gezeigten Schwärzungen 34 sind, zumindest aus der Perspektive des Betrachters, optisch nur schwer oder nicht von den in Figur 2B gezeigten Schwärzungen 24 zu unterscheiden. Die Fertigung und die Eigenschaften der Schwärzungen 34 korrespondieren zu den Schwärzungen 24 wie im Zusammenhang mit Figur 2B beschrieben. Analog gilt dies für Schwärzungen in der dritten transparenten Schicht 50 und/oder der vierten transparenten Schicht 60. (Nicht gezeigt)

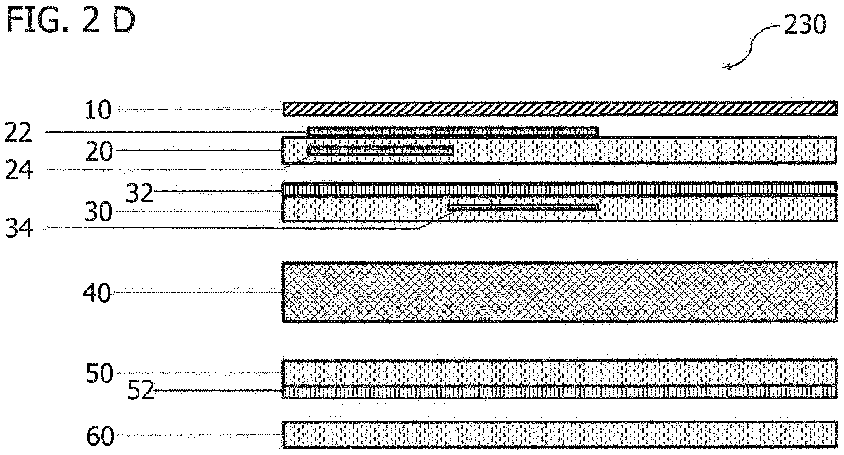

Figur 2D zeigt eine Sicherheitseinlage 230 für ein Ausweisdokument mit optisch erkennbaren Zeichen, welche sowohl Schwärzungen 24 in der ersten transparenten Schicht 20 als auch Schwärzungen 34 in der zweiten transparenten Schicht 30 umfasst. Die Schwärzungen befinden sich in verschiedenen Bereichen unterhalb des Farbaufdrucks 22.

In anderen Ausführungsformen (nicht gezeigt) können sich die Schwärzungen aus der Perspektive des Betrachters überlagern und/oder ergänzen.

Sowohl die Schwärzungen 24 als auch die Schwärzungen 34 können einen Beitrag zum Schwarzanteil eines Gesamtbildes liefern, welches ein Betrachter der Sicherheitseinlage optisch wahrnimmt, als auch teilweise oder vollständig vom Farbauftrag 22 verdeckt sein. Das teilweise oder vollständige optische Verdecken der Schwärzungen 24, 34 durch den Farbauftrag 22 aus der Perspektive des Betrachters der Sicherheitseinlage kann insbesondere durch einen buntschwarzen Teil des Farbauftrags 22 bewirkt werden.

Ein Vorteil einer Sicherheitseinlage 230 wie in 2D gezeigt ist es, dass es einem Betrachter erschwert ist festzustellen in welcher transparenten Schicht sich eine Schwärzung befindet, ohne die Sicherheitseinlage 230 zu zerstören. Eine Fälschung der Sicherheitseinlage ist somit erschwert.

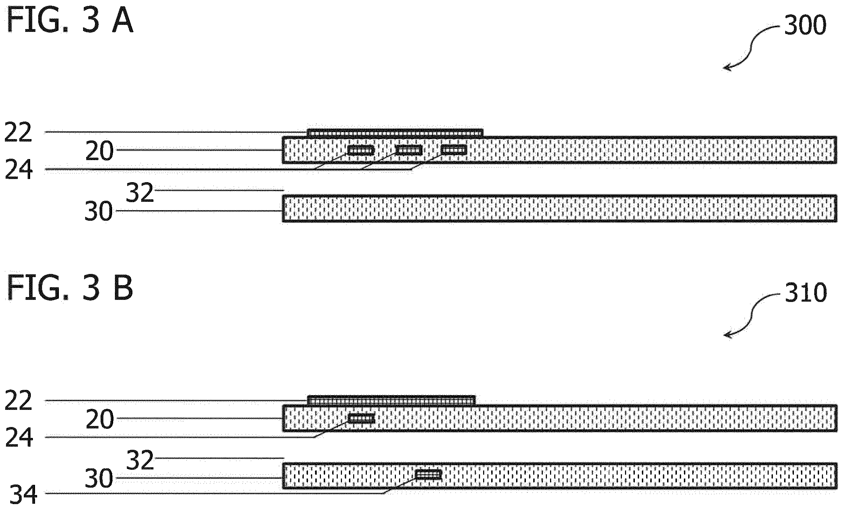

Figur 3A zeigt eine Sicherheitseinlage 300 mit optisch erkennbaren Zeichen für ein Ausweisdokument. Die in Figur 3A gezeigte Sicherheitseinlage umfasst eine erste transparente Schicht 20 und eine zweite transparente Schicht 30, welche jeweils aus Polycarbonat mit kohlenstoffhaltigen Additiven gefertigt sind. Auf der ersten transparenten Schicht 20 befindet sich ein Farbauftrag 22.

Weiter hat die erste transparente Schicht 20 mehrere Schwärzungen 24, welche durch die Einwirkung eines Strahls aus Laserlicht auf die in der ersten transparenten Schicht 20 enthaltenen kohlenstoffhaltigen Additive gezielt gebildet wurden.

In anderen Ausführungsformen (nicht gezeigt) können jene Schichten, welche keine Schwärzungen aufweisen z.B. auch aus Polycarbonat ohne kohlenstoffhaltige Additive gefertigt sein.

Der Farbauftrag 22 befindet sich auf der Oberfläche der ersten transparenten Schicht 20 und ist durch einen Farbaufdruck aus den Basisfarben Cyan, Magenta und Yellow gebildet. (Der Farbauftrag 22 ist in der schematischen Zeichnung deutlich überhöht dargestellt, um im Querschnitt sichtbar zu sein.)

Der in Figur 3A gezeigte Farbauftrag 22 enthält keine schwarzen Farbanteile, ist für Infrarotlicht transparent und reflektiert sichtbares Licht.

Der Farbauftrag 22 und die Schwärzungen 24 ergänzen einander, zumindest aus der Perspektive eines Betrachters, zu einem Gesamtbild. Die Schwarzanteile des Gesamtbildes werden hierbei durch die Schwärzungen 24 gebildet. Die Schwärzungen 24 reflektieren sowohl sichtbares Licht als auch infrarotes Licht

Die Schwärzungen 24 bilden somit einen ersten Teil der optisch erkennbaren Zeichen der Sicherheitseinlage 300 und der Farbauftrag 22 bildet einen zweiten Teil der optisch erkennbaren Zeichen der Sicherheitseinlage 300.

Für einen Betrachter ist während der Bestrahlung der Sicherheitseinlage 300 mit sichtbarem Licht das gemeinsam durch den ersten Teil der optisch erkennbaren Zeichen und den zweiten Teil der optisch erkennbaren Zeichen gebildete Gesamtbild sichtbar. Während der Bestrahlung der Sicherheitseinlage 300 mit ausschließlich infrarotem Licht ist für einen Betrachter ausschließlich der erste Teil der optisch erkennbaren Zeichen sichtbar.

Figur 3B zeigt eine Weiterentwicklung der Sicherheitseinlage 310 mit optisch erkennbaren Zeichen für ein Ausweisdokument. Die in Figur 3B gezeigte Weiterentwicklung umfasst alle beschriebenen Merkmale der Figur 3A. Zusätzlich weist in Figur 3B auch die zweite transparente Schicht 30 zumindest eine Schwärzung 34 auf. Die Schwärzung 34 ist, analog zu den Schwärzungen 24, durch die Bestrahlung der zweiten transparenten Schicht 30 mit Laserlicht ausgebildet.

Analog zu den Schwärzungen 24 ergänzt auch die Schwärzung 34 den Farbauftrag 22, zumindest aus der Perspektive des Betrachters, zu einem Gesamtbild. Die Schwarzanteile des Gesamtbildes werden in der in Figur 3B gezeigten Variante sowohl durch die Schwärzungen 24 als auch durch die Schwärzung 34 gebildet. Die Schwärzung 34 bildet zusammen mit den Schwärzungen 24 den ersten Teil der optisch erkennbaren Zeichen, welcher sowohl sichtbares als auch infrarotes Licht reflektiert.

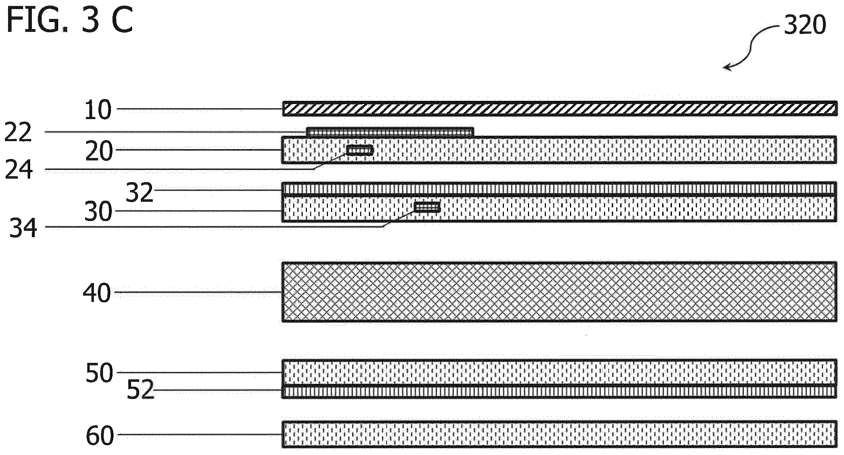

Figur 3C zeigt eine Weiterentwicklung einer Sicherheitseinlage 320 mit optisch erkennbaren Zeichen für ein Ausweisdokument. Die in Figur 3C gezeigte Weiterentwicklung umfasst alle beschriebenen Merkmale der Figuren 3A und 3B.

Figur 3C umfasst gegenüber den Figuren 3A und 3B weiter eine Abdeckschicht 10, ein Inlay 40 eine dritte transparente Schicht 50, eine vierte transparente Schicht 60 einen ersten Hintergrundfarbauftrag 32 und einen zweiten Hintergrundfarbauftrag 52.

Der erste Hintergrundfarbauftrag 32 befindet sich auf der der Abdeckschicht 10 zugewandten Oberfläche der zweiten transparenten Schicht 30. Der zweite Hintergrundfarbauftrag 52 befindet sich auf der der Abdeckschicht 10 abgewandten Oberfläche der dritten transparenten Schicht 50.

In anderen Ausführungsformen (nicht gezeigt) können eine Anzahl von weiteren Hintergrundfarbaufträgen auf den transparenten Schichten und/oder dem Inlay befindlich sein.

Die Figur 3C gezeigte Abdeckschicht 10 ist für sichtbares Licht und/oder Infrarotlicht transparent, während das gezeigte Inlay 40 für sichtbares und infrarotes Licht opak ist.

In einer Weiterentwicklung (nicht gezeigt) kann eine der transparenten Schichten 20, 30, 50, 60 und/oder das Inlay 40 ein Hologrammelement umfassen, welches für einen Betrachter der Sicherheitseinlage 320 sichtbar ist und einen visuell-holographischen Effekt hat. Der visuell-holographische Effekt kann sowohl unter sichtbarem wie auch unter unsichtbarem Licht, insbesondere unter infrarotem und/oder ultraviolettem Licht, optisch erkennbar sein.

In einer Variante kann das Hologrammelement für UV-Licht transparent sein.

Das Hologrammelement kann sich, zumindest aus der Perspektive eines Betrachters, mit einem Teil der optisch erkennbaren Zeichen zumindest teilweise überlagern.

In einer Weiterentwicklung kann das Hologrammelement auch zwischen den transparenten Schichten 20, 30, 50, 60 und/oder dem Inlay 40 angeordnet sein. Insbesondere kann das Hologrammelement zwischen der ersten transparenten Schicht 20 und der zweiten transparenten Schicht 30 oder zwischen der zweiten transparenten Schicht 30 und dem Inlay 40 angeordnet sein.

Das Inlay 40 ist zwischen der zweiten transparenten Schicht 30 und der dritten transparenten Schicht 50 angeordnet, sodass es die zweite und die dritte transparente Schicht vollständig voneinander trennt und jeweils vollständig an den Oberflächen der zweiten transparenten Schicht 30 und der dritten transparenten Schicht 50 anliegt. Das Inlay 40 ist in dem in Figur 3C dargestellten Beispiel parallel zu den transparenten Schichten 20, 30, 50, 60 angeordnet.

In einer anderen Weiterentwicklung (nicht gezeigt) kann das Inlay 40 zumindest zwei optisch aktive Inlayschichten, welche einen RFID Chip und/oder ein Antennenelement umschließen, haben.

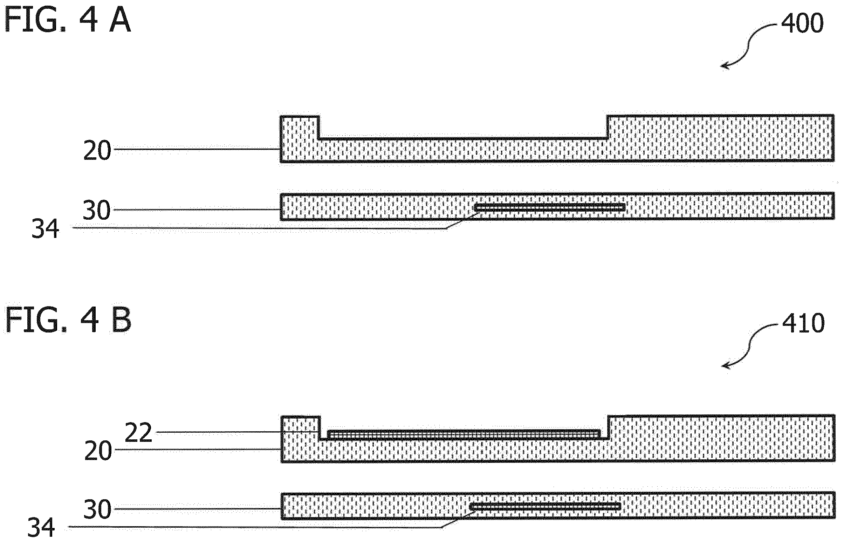

Die Figuren 4A und 4B zeigen beispielhaft einen Schichtaufbau für eine Sicherheitseinlage 400, 410 mit optisch erkennbaren Zeichen für ein Ausweisdokument mit einer Vertiefung.

Die in den Figuren 4A und 4B gezeigten Sicherheitseinlagen 400, 410 umfassen jeweils eine erste transparente Schicht 20 und eine zweite transparente Schicht 30, welche jeweils aus Polycarbonat mit kohlenstoffhaltigen Additiven gefertigt sind.

In anderen Ausführungsformen (nicht gezeigt) können jene Schichten, welche keine Schwärzungen aufweisen z.B. auch aus Polycarbonat ohne kohlenstoffhaltige Additive gefertigt sein.

Die in Figur 4A gezeigte erste transparente Schicht 20 hat eine Vertiefung. Die Vertiefung kann zum Beispiel eine Tiefe von 40 - 80 µm aufweisen. Die zweite transparente Schicht 30 hat die Schwärzungen 34, welche sich zumindest teilweise aus der Perspektive eines Betrachters der Sicherheitseinlage 400 unterhalb der Vertiefung befindet. Die Schwärzungen 34 sind durch die Einwirkung eines Strahls aus Laserlicht auf die in der zweiten transparenten Schicht 30 enthaltenen kohlenstoffhaltigen Additive ausgebildet.

Figur 4B zeigt zusätzlich zu den in Figur 4A gezeigten Merkmalen den Farbauftrag 22, welcher sich in der Vertiefung der ersten transparenten Schicht 20 befindet. Der Farbauftrag 22 ist durch einen Farbaufdruck aus den Basisfarben Cyan, Magenta und Yellow gebildet. Der Farbauftragt überragt die Vertiefung nicht. (Der Farbauftrag 22 ist in der schematischen Zeichnung deutlich überhöht dargestellt, um im Querschnitt sichtbar zu sein.)

In einem Ausführungsbeispiel (nicht gezeigt) kann die Kontur der Vertiefung im Wesentlichen an die grafische Information angepasst sein, welche durch den ersten Teil der optisch erkennbaren Zeichen und den zweiten Teil der optisch erkennbaren Zeichen gemeinsam gebildet ist.

Der in Figur 4A und 4B gezeigte Farbauftrag 22 enthält keine schwarzen Farbanteile, ist für Infrarotlicht transparent und reflektiert sichtbares Licht.

Der Farbauftrag 22, welcher aus den Basisfarben Cyan, Magenta und Yellow gebildet ist, und die Schwärzungen 34 ergänzen einander, zumindest aus der Perspektive eines Betrachters, zu einem Gesamtbild. Die Schwarzanteile des Gesamtbildes werden hierbei durch die Schwärzung in 34 gebildet. Die Schwärzung in 34 reflektieren sowohl sichtbares Licht als auch infrarotes Licht.

Die Schwärzungen 34 bilden somit einen ersten Teil der optisch erkennbaren Zeichen der Sicherheitseinlage 400, 410 und der Farbauftrag 22 bildet einen zweiten Teil der optisch erkennbaren Zeichen der Sicherheitseinlage 400, 410.

Für einen Betrachter ist während der Bestrahlung der Sicherheitseinlage 400, 410 mit sichtbarem Licht das gemeinsam durch den ersten Teil der optisch erkennbaren Zeichen und den zweiten Teil der optisch erkennbaren Zeichen gebildete Gesamtbild sichtbar. Während der Bestrahlung der Sicherheitseinlage 400, 410 mit ausschließlich infrarotem Licht ist für einen Betrachter ausschließlich der erste Teil der optisch erkennbaren Zeichen sichtbar.

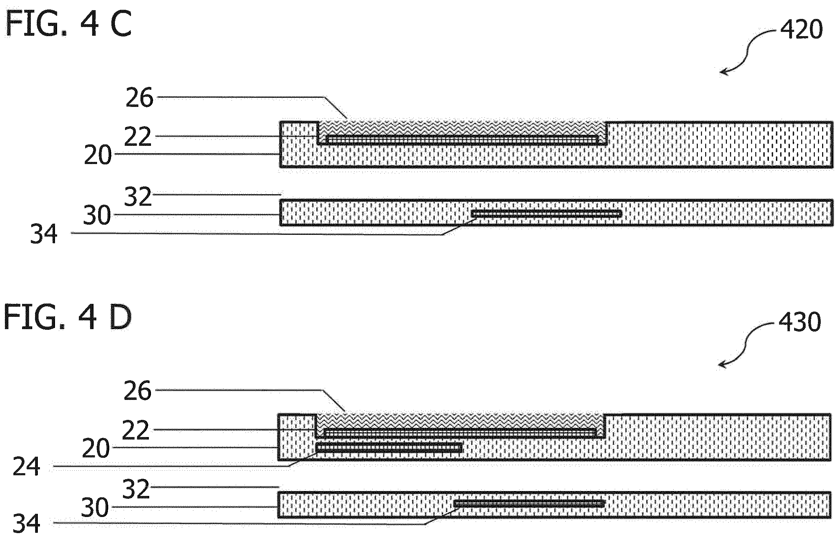

Figur 4C zeigt beispielhaft einen Schichtaufbau für eine Sicherheitseinlage 420 mit optisch erkennbaren Zeichen für ein Ausweisdokument mit einer Vertiefung, welche mit einem Polymermaterial aufgefüllt ist. Das Polymermaterial kann insbesondere ein Lackmaterial sein.

Figur 4C enthält alle Merkmale der Figuren 4A und 4B. Weiter zeigt Figur 4C ein Polymermaterial 26, welches sich in der Vertiefung der ersten transparenten Schicht 20 befindet. Das gezeigte Polymermaterial 26 ist für sichtbares und unsichtbares, insbesondere ultraviolettes oder infrarotes, Licht transparent und thermisch aushärtbar.

Das Polymermaterial kann in einer Ausführungsform (nicht gezeigt) einen Zusatz aufweisen, welcher UV-Licht in einem ersten und/oder in einem zweiten Wellenlängenbereich reflektiert, insbesondere UV-Licht reflektierende Farbpigmente.

In einer Weiterentwicklung (nicht gezeigt) kann das Polymermaterial forensische Marker, insbesondere Silizium, Siliziumdioxid, Glimmer, Titanoxid und/oder Zinnoxid enthalten.

Das in der Vertiefung der ersten transparenten Schicht 20 befindliche Polymermaterial 26 schließt bündig mit der Oberfläche der ersten transparenten Schicht 20 ab, sodass die Gesamtoberfläche der ersten transparenten Schicht 20 und des Polymermaterials 26 eine plane Fläche ohne erhabene oder vertiefte Abschnitte ist.

Figur 4D zeigt beispielhaft einen Schichtaufbau für eine Sicherheitseinlage 430 mit optisch erkennbaren Zeichen für ein Ausweisdokument mit einer Vertiefung, welche mit einem Polymermaterial aufgefüllt ist.

Figur 4D enthält alle Merkmale der Figur 4C. Zusätzlich zeigt Figur 4D die Schwärzungen 24 in der ersten Schicht 20. Die Schwärzungen 24 in der ersten transparenten Schicht 20 und die Schwärzungen 34 in der zweiten transparenten Schicht 30 befinden sich aus der Perspektive des Betrachters in verschiedenen Bereichen unterhalb des Farbauftrags 22.

In anderen Ausführungsformen (nicht gezeigt) können sich die Schwärzungen aus der Perspektive des Betrachters überlagern und/oder ergänzen.

Die Schwärzungen 24 sind, analog zu den Schwärzungen 34, durch die Bestrahlung der ersten transparenten Schicht 20 mit Laserlicht ausgebildet.

Sowohl die Schwärzungen 24 als auch die Schwärzungen 34 können einen Beitrag zum Schwarzanteil eines Gesamtbildes liefern, welches ein Betrachter der Sicherheitseinlage optisch wahrnimmt, als auch teilweise oder vollständig vom Farbauftrag 22 verdeckt sein. Das teilweise oder vollständige optische Verdecken der Schwärzung 24, 34 durch den Farbauftrag 22 aus der Perspektive des Betrachters der Sicherheitsanlage kann insbesondere durch einen buntschwarzen Teil des Farbauftrags 22 bewirkt werden.

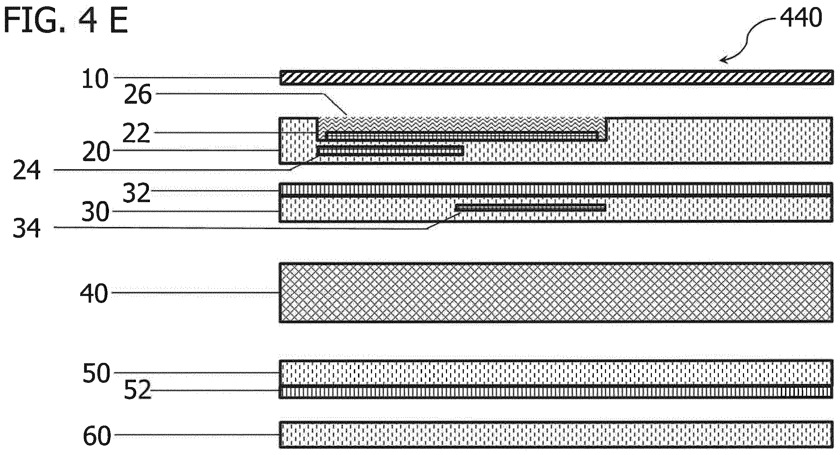

Figur 4E zeigt eine Weiterentwicklung einer Sicherheitseinlage 440 mit optisch erkennbaren Zeichen für ein Ausweisdokument. Die in Figur 4E gezeigte Weiterentwicklung umfasst alle beschriebenen Merkmale der Figur 4D.

Figur 4E umfasst gegenüber der Figur 4D weiter eine Abdeckschicht 10, ein Inlay 40, eine dritte transparente Schicht 50, eine vierte transparente Schicht 60 einen ersten Hintergrundfarbauftrag 32 und einen zweiten Hintergrundfarbauftrag 52.

Insbesondere in Ausführungsbeispielen der Sicherheitseinlage, in denen der Farbauftrag vollständig von dem Polymermaterial, welches insbesondere ein Lackmaterial sein kann und der ersten transparenten Schicht umschlossen wird, kann auf eine transparente Abdeckschicht verzichtet werden. In diesen Ausführungsbeispielen kann die erste transparente Schicht die äußerste Schicht der Sicherheitseinlage darstellen.

Der erste Hintergrundfarbauftrag 32 befindet sich auf der der Abdeckschicht 10 zugewandten Oberfläche der zweiten transparenten Schicht 30. Weiter ist der erste Hintergrundfarbauftrag 32 zwischen dem Farbauftrag 22 und der Schwärzung 34 angeordnet. Der zweite Hintergrundfarbauftrag 52 befindet sich auf der der Abdeckschicht 10 abgewandten Oberfläche der dritten transparenten Schicht 50.

In anderen Ausführungsforme (nicht gezeigt) können eine Anzahl von weiteren Hintergrundfarbaufträgen auf den transparenten Schichten und oder dem Inlay befindlich sein.

In Ausführungsformen, in denen die Sicherheitseinlage alternativ oder ergänzend zu der Abdeckschicht 10 eine aufgedruckte Lackschicht aufweist, kann die Vertiefung mit dem Lackmaterial ausgefüllt sein, aus welchen zugleich die Lackschicht gebildet ist. Mit anderen Worten können die Lackschicht und das Material, welches die Vertiefung ausfüllt, in diesen Ausführungsformen einstückig ausgebildet sein und insbesondere durch ein Druckverfahren in die Vertiefung bzw. auf die erste transparente Schicht eingebracht/aufgebracht sein (nicht gezeigt).

In einer Weiterbildung kann das Polymermaterial bzw. Lackmaterial nanoskalige Luminophore aufweisen, welche UV-Licht einer vorbestimmten Wellenlänge reflektieren. Wird die Sicherheitseinlage mit UV-Licht der vorbestimmten Wellenlänge beleuchtet, so verdeckt das von dem Polymermaterial bzw. Lackmaterial (bzw. von den darin enthaltenen Luminophoren) reflektierte UV-Licht für einen Betrachter den darunter befindlichen Farbauftrag bzw. die darunter befindlichen Schwärzungen / die darunter befindlichen optischen Zeichen.

Die in Figur 4E gezeigte Abdeckschicht 10 ist für sichtbares Licht und Infrarotlicht transparent, während das gezeigte Inlay 40 für sichtbares Licht und Infrarotlicht opak ist.

Das Inlay 40 ist zwischen der zweiten transparenten Schicht 30 und der dritten transparenten Schicht 50 angeordnet, sodass es die zweite und die dritte transparente Schicht vollständig voneinander trennt und jeweils vollständig an den Oberflächen der zweiten transparenten Schicht 30 und der dritten transparenten Schicht 50 anliegt. Das Inlay 40 ist in der in Figur 4E dargestellten Ausführungsform parallel zu den transparenten Schichten 20, 30, 50, 60 angeordnet.

In einer Weiterentwicklung (nicht gezeigt) kann eine der transparenten Schichten 20, 30 , 50, 60 und/oder das Inlay 40 ein Hologrammelement umfassen, welches für einen Betrachter der Sicherheitseinlage 440 sichtbar ist und einen visuell-holographischen Effekt hat. Der visuell-holographische Effekt kann sowohl unter sichtbarem wie auch unter unsichtbarem Licht, insbesondere unter infrarotem und/oder ultraviolettem Licht, optisch erkennbar sein.

Das Hologrammelement kann sich, zumindest aus der Perspektive eines Betrachters, mit einem Teil der optisch erkennbaren Zeichen zumindest teilweise überlagern.

In anderen Weiterentwicklungen (nicht gezeigt) kann das Hologrammelement auch zwischen den transparenten Schichten und/oder dem Inlay angeordnet sein. Insbesondere kann das Hologrammelement zwischen der ersten transparenten Schicht und der zweiten transparenten Schicht oder zwischen der zweiten transparenten Schicht und dem Inlay angeordnet sein.

In einer anderen Weiterentwicklung (nicht gezeigt) kann das Inlay 40 zumindest zwei opake Inlayschichten, welche einen RFID Chip und/oder ein Antennenelement umschließen, haben.

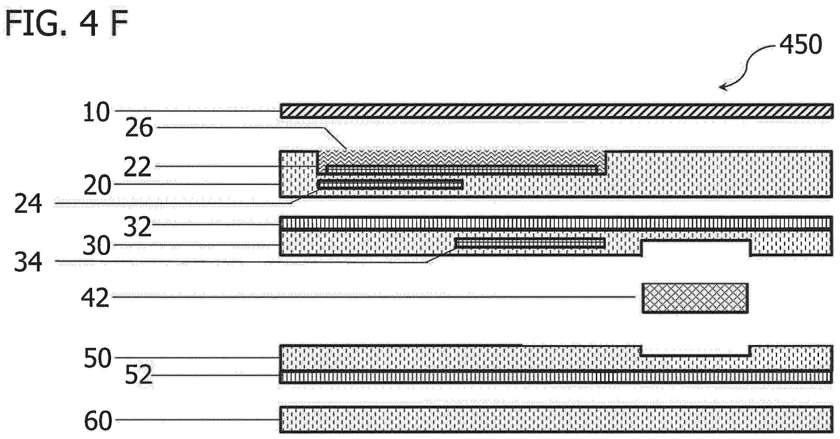

Figur 4F zeigt eine alternative Weiterentwicklung der Sicherheitseinlage 450 mit optisch erkennbaren Zeichen für ein Ausweisdokument. Die in Figur 4F gezeigte Weiterentwicklung umfasst alle beschriebenen Merkmale der Figur 4E bis auf das Inlay 40. Das gezeigte Inlay ist 42 dazu ausgebildet und angeordnet, in einer Vertiefung der zweiten transparenten Schicht 30 und einer Vertiefung der dritten transparenten Schicht 50 befindlich zu sein. Im Unterschied zu dem in Figur 4E gezeigten Beispiel hat das Inlay 42 in einem Querschnitt eine geringere Ausdehnung als die das Inlay umgreifenden transparenten Schichten 30, 50.

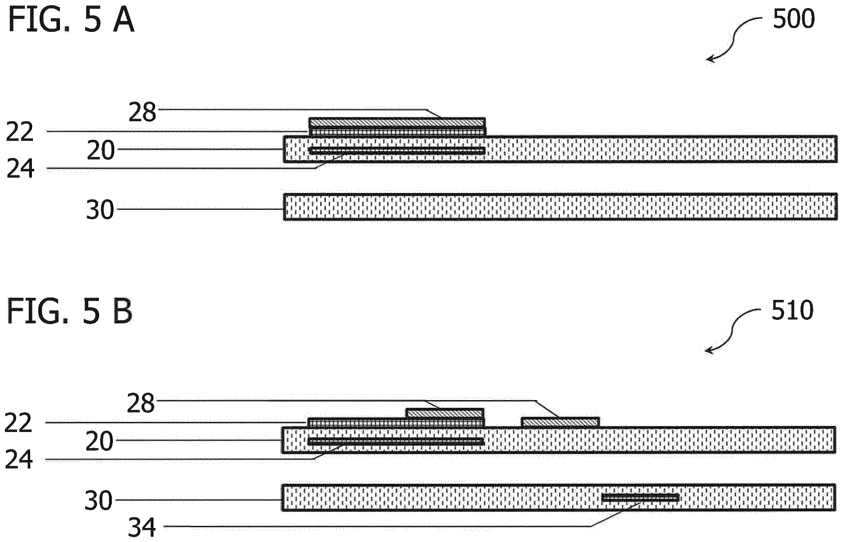

Figur 5A zeigt eine Sicherheitseinlage 500 mit optisch erkennbaren Zeichen für ein Ausweisdokument mit einem ersten UV-Farbauftrag 28.

Die in Figur 5A gezeigte Sicherheitseinlage 500 umfasst eine erste transparente Schicht 20 und eine zweite transparente Schicht 30, welche jeweils aus Polycarbonat mit kohlenstoffhaltigen Additiven gefertigt sind. Auf der ersten transparenten Schicht 20 befindet sich ein Farbauftrag 22.

In anderen Ausführungsformen (nicht gezeigt) können jene Schichten, welche keine Schwärzungen aufweisen z.B. auch aus Polycarbonat ohne kohlenstoffhaltige Additive gefertigt sein.

Weiter hat die erste transparente Schicht 20 mehrere Schwärzungen 24 (schematisch ist stellvertretend nur eine Schwärzung 24 dargestellt), welche durch die Einwirkung eines Strahls aus Laserlicht auf die in der ersten transparenten Schicht 20 enthaltenen kohlenstoffhaltigen Additive gezielt gebildet wurden.

Der Farbauftrag 22 befindet sich auf der Oberfläche der ersten transparenten Schicht 20. (Der Farbauftrag 22 ist in der schematischen Zeichnung deutlich überhöht dargestellt, um im Querschnitt sichtbar zu sein.)

Der in Figur 5A gezeigte Farbauftrag 22 enthält keine schwarzen Farbanteile und reflektiert sichtbares Licht und UV-Licht.

In anderen Ausführungsformen (nicht gezeigt) kann der Farbauftrag 22 für UV-Licht transparent sein.

Der Farbauftrag 22, welcher aus den Basisfarben Cyan, Magenta und Yellow gebildet ist, und die Schwärzungen 24 ergänzen einander, zumindest aus der Perspektive eines Betrachters, zu einem Gesamtbild. Die Schwarzanteile des Gesamtbildes werden hierbei durch die Schwärzungen 24 gebildet.

Die Schwärzungen 24 bilden somit einen ersten Teil der optisch erkennbaren Zeichen der Sicherheitseinlage 500 und der Farbauftrag 22 bildet einen zweiten Teil der optisch erkennbaren Zeichen der Sicherheitseinlage 500.

Weiter zeigt Figur 5A einen ersten UV Farbauftrag 28, welcher sich auf dem Farbauftrag 22 befindet. Der erste UV Farbauftrag 28 ist für sichtbares Licht transparent und reflektiert UV-Licht einer ersten Wellenlänge und bildet einen dritten Teil der optisch erkennbaren Zeichen der Sicherheitseinlage 500. (Der UV-Farbauftrag 28 ist in der schematischen Zeichnung deutlich überhöht dargestellt, um im Querschnitt sichtbar zu sein.)

Für einen Betrachter ist während der Bestrahlung der Sicherheitseinlage 500 mit sichtbarem Licht das gemeinsam durch den ersten Teil der optisch erkennbaren Zeichen und den zweiten Teil der optisch erkennbaren Zeichen gebildete Gesamtbild sichtbar. Während der Bestrahlung der Sicherheitseinlage 500 mit UV-Licht einer ersten Wellenlänge ist für einen Betrachter der dritte Teil der optisch erkennbaren Zeichen sichtbar.

Figur 5B zeigt eine Weiterentwicklung der Sicherheitseinlage 510 mit optisch erkennbaren Zeichen für ein Ausweisdokument mit einem ersten UV-Farbauftrag 28. Die in Figur 5B gezeigte Weiterentwicklung umfasst alle beschriebenen Merkmale der Figur 5A. Zusätzlich weist in Figur 5B auch die zweite transparente Schicht 30 zumindest eine Schwärzung 34 auf. Die Schwärzung 34 ist, analog zu den Schwärzungen 24, durch die Bestrahlung der zweiten transparenten Schicht 30 mit Laserlicht ausgebildet.

Die Schwärzungen 34 der zweiten transparenten Schicht 30 bilden zusammen mit den Schwärzungen 24 der ersten transparenten Schicht 20 den ersten Teil der optisch erkennbaren Zeichen der Sicherheitseinlage 510.

Die in Figur 5B gezeigten Schwärzungen 34 der zweiten transparenten Schicht 30 werden aus der Perspektive des Betrachters nicht durch den Farbauftrag 22 verdeckt. Die gezeigten Schwärzungen 34 der zweiten transparenten Schicht 30 sind analog zu den Schwärzungen 24 in der ersten transparenten Schicht 20 optisch erkennbar, überlagern sich jedoch nicht mit dem Farbauftrag 22. Die Schwärzungen 34 der zweiten transparenten Schicht 30 bilden der in Figur 5B gezeigten Ausführungsvariante ein ausschließlich aus Schwärzungen bestehendes separates optisch erkennbares Zeichen.

Weiter zeigt Figur 5B, dass sich ein Teil des ersten UV Farbauftrags 28 auf dem Farbauftrag 22 befindet und ein Teil des ersten UV Farbauftrags 28 sich auf der Oberfläche der transparenten Schicht 22 befindet. Somit überlagert der dritte Teil der optisch erkennbaren Zeichen, welche durch den UV-Farbauftrag 28 gebildet werden, nur teilweise den ersten bzw. zweiten Teil der optisch erkennbaren Zeichen.

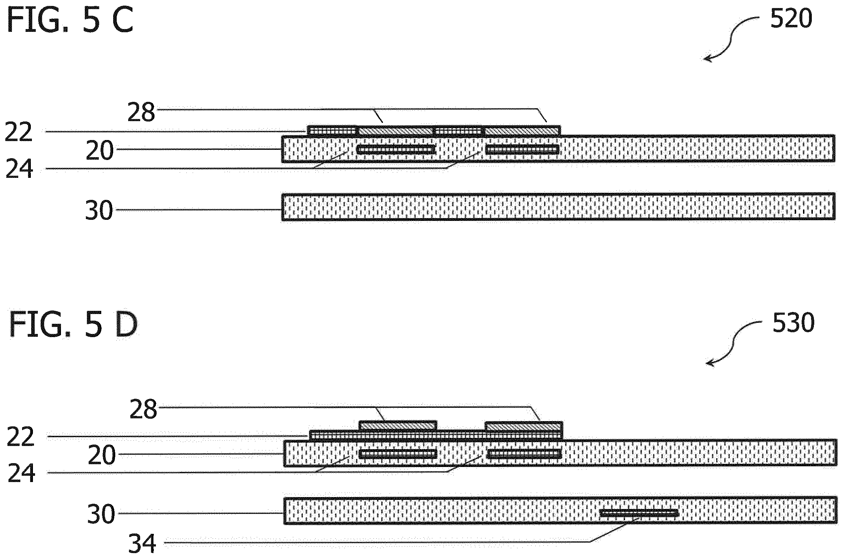

Die Figuren 5C und 5D zeigen beispielhaft weitere Ausführungsformen einer Sicherheitseinlage 520, 530 mit optisch erkennbaren Zeichen für ein Ausweisdokument mit einem ersten UV-Farbauftrag 28.

Figur 5C zeigt analog zu Figur 5A die erste transparente Schicht 20, die Schwärzungen 24 eine zweite transparente Schicht 30, den Farbauftrag 22 sowie den ersten UV Farbauftrag 28. Analog zu Figur 5A wird ein erster Teil der optisch erkennbaren Zeichen durch die Schwärzungen 24 gebildet, ein zweiter Teil der optisch erkennbaren Zeichen durch den Farbauftrag 22 und ein dritter Teil der optisch erkennbaren Zeichen wird durch den ersten UV-Farbauftrag 28 gebildet.

In der in Figur 5C gezeigten Ausführungsform überlagert der dritte Teil der optisch erkennbaren Zeichen den ersten Teil der optisch erkennbaren Zeichen, während der zweite Teil der optisch erkennbaren Zeichen nicht überlagert wird. Somit ist für den Betrachter während der Bestrahlung der Sicherheitseinlage 520 mit sichtbarem Licht eine sich nicht überlagernde Anordnung des ersten und des zweiten Teils der optisch erkennbaren Zeichen sichtbar. Während der Bestrahlung der Sicherheitseinlage 520 mit UV-Licht einer ersten Wellenlänge ist eine sich überlagernde Anordnung des ersten, des zweiten und des dritten Teils der optischen Zeichen sichtbar.

Figur 5D zeigt analog zu Figur 5A die erste transparente Schicht 20, die Schwärzungen 24 eine zweite transparente Schicht 30, den Farbauftrag 22 sowie den ersten UV Farbauftrag 28. Analog zu Figur 5A wird ein erster Teil der optisch erkennbaren Zeichen durch die Schwärzungen 24 gebildet, ein zweiter Teil der optisch erkennbaren Zeichen durch den Farbauftrag 22 und ein dritter Teil der optisch erkennbaren Zeichen wird durch den ersten UV-Farbauftrag 28 gebildet.

Die in Figur 5D gezeigten Schwärzungen 34 der zweiten transparenten Schicht 30 werden aus der Perspektive des Betrachters nicht durch den Farbauftrag 22 verdeckt. Die gezeigten Schwärzungen 34 der zweiten transparenten Schicht 30 sind analog zu den Schwärzungen 24 in der ersten transparenten Schicht 20 optisch erkennbar, bilden jedoch nicht mit dem Farbauftrag 22 zusammen ein Gesamtbild. Die Schwärzungen 34 der zweiten transparenten Schicht 30 bilden der in Figur 5D gezeigten Ausführungsvariante ein ausschließlich aus Schwärzungen gebildetes optisch erkennbares Zeichen.

Weiter wird in der in Figur 5D gezeigten Ausführungsform nur ein Teil des Farbauftrags 22 durch den ersten UV Farbauftrag 28 überdeckt. Jedoch werden die Schwärzungen 24 der ersten transparenten Schicht vollständig überdeckt.

Somit ist für den Betrachter während der Bestrahlung der Sicherheitseinlage 530 mit sichtbarem Licht eine sich überlagernde Anordnung des ersten und des zweiten Teils der optisch erkennbaren Zeichen sichtbar sowie eine sich nicht mit dem zweiten Teil der optisch erkennbaren Zeichen überlagernde Anordnung des ersten Teils der optisch erkennbaren Zeichen.

Während der Bestrahlung der Sicherheitseinlage 530 mit UV-Licht einer ersten Wellenlänge ist eine sich überlagernde Anordnung des ersten, zweiten und des dritten Teils der optischen Zeichen sichtbar.

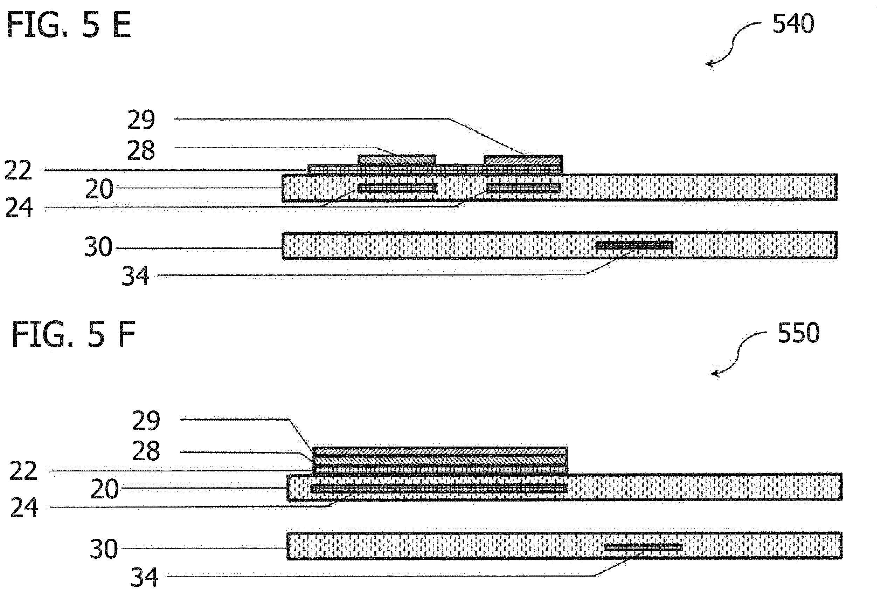

Die Figuren 5E und 5F zeigen eine der Sicherheitseinlage 540, 550 mit optisch erkennbaren Zeichen für ein Ausweisdokument mit einem ersten UV Farbauftrag 28 und einem zweiten UV Farbauftrag 29.

Die in den Figuren 5E und 5F gezeigte Sicherheitseinlage 540, 550 umfasst eine erste transparente Schicht 20 und eine zweite transparente Schicht 30, welche jeweils aus Polycarbonat mit kohlenstoffhaltigen Additiven gefertigt sind. Auf der ersten transparenten Schicht 20 befindet sich jeweils ein Farbauftrag 22.

Weiter hat die erste transparente Schicht 20 mehrere Schwärzungen 24, welche durch die Einwirkung eines Strahls aus Laserlicht auf die in der ersten transparenten Schicht 20 enthaltenen kohlenstoffhaltigen Additive gebildet wurden.

Analog hierzu hat die zweite transparente Schicht 30 mehrere Schwärzungen 34 (schematisch ist nur eine Schwärzung dargestellt), welche durch die Einwirkung eines Strahls aus Laserlicht auf die in der zweiten transparenten Schicht 30 enthaltenen kohlenstoffhaltigen Additive gebildet wurden.

Der in den Figuren 5E und 5F gezeigte Farbauftrag 22 enthält keine schwarzen Farbanteile und reflektiert sichtbares Licht und UV-Licht. In anderen Ausführungsformen (nicht gezeigt) kann der Farbauftrag 22 für UV-Licht transparent sein und/oder auch schwarze Farbanteile aufweisen, welche für infrarotes Licht transparent sind.

Der Farbauftrag 22, welcher aus den Basisfarben Cyan, Magenta und Yellow gebildet ist, und die Schwärzungen 24 ergänzen einander, zumindest aus der Perspektive eines Betrachters, zu einem Gesamtbild. Die Schwarzanteile des Gesamtbildes werden hierbei zumindest teilweise durch die Schwärzungen 24 gebildet.

Die Schwärzungen 24 und die Schwärzungen 34 bilden einen ersten Teil der optisch erkennbaren Zeichen der Sicherheitseinlage 540, 550 und der Farbauftrag 22 bildet einen zweiten Teil der optisch erkennbaren Zeichen der Sicherheitseinlage. Die Schwärzungen 34 der zweiten transparenten Schicht 30 werden aus der Perspektive des Betrachters nicht durch den Farbauftrag 22 verdeckt. Die gezeigten Schwärzungen 34 der zweiten transparenten Schicht 30 sind analog zu den Schwärzungen 24 in der ersten transparenten Schicht 20 optisch erkennbar, bilden jedoch eine separate optisch erkennbare Information, welche räumlich von der optisch erkennbaren Information getrennt ist, welche für den Betrachter durch die Kombination der Schwärzungen 24 mit dem Farbauftrag 22 unter sichtbarem Licht wahrnehmbar ist. Die Schwärzungen 34 können zum Beispiel eine optisch erkennbare Textinformation (z.B. Namen, Adressen, personenbezogene Daten) ausbilden und in anderen Ausführungsformen (nicht gezeigt) von dem ersten und/oder zweiten UV-Farbauftrag überlappt werden.

Weiter zeigen die Figuren 5E und 5F einen ersten UV Farbauftrag 28, welcher sich auf dem Farbauftrag 22 befindet. Der erste UV Farbauftrag 28 ist für sichtbares Licht transparent und reflektiert UV-Licht einer ersten Wellenlänge und bildet einen dritten Teil der optisch erkennbaren Zeichen der Sicherheitseinlage 540, 550.

Zudem zeigen die Figuren 5E und 5F einen zweiten UV-Farbauftrag 29, welcher für sichtbares Licht transparent ist und UV-Licht einer zweiten Wellenlänge reflektiert. Der zweite UV-Farbauftrag 29 bildet einen vierten Teil der optisch erkennbaren Zeichen der Sicherheitseinlage 540, 550.

In dem in Figur 5E gezeigten Ausführungsbeispiel befindet sich sowohl der erste UV-Farbauftrag 28 als auch der zweite UV-Farbauftrag 29 jeweils auf einem Teil des Farbauftrags 22. In anderen Ausführungsbeispielen (nicht gezeigt) kann der erste UV-Farbauftrag 28 und/oder der zweite UV-Farbauftrag 29 den Farbauftrag 22 nur teilweise überlappen.

In dem in Figur 5F gezeigten Ausführungsbeispiel befindet sich der erste UV-Farbauftrag 28 auf dem Farbauftrag 22 und der zweite UV Farbauftrag 29 befindet sich auf dem UV-Farbauftrag 28.

Für einen Betrachter ist während der Bestrahlung der in den Figuren 5E und 5F gezeigten Sicherheitseinlage 540, 550 mit sichtbarem Licht das gemeinsam durch den ersten Teil der optisch erkennbaren Zeichen und den zweiten Teil der optisch erkennbaren Zeichen gebildete Gesamtbild sichtbar. Zusätzlich ist auch der erste Teil der optischen Zeichen sichtbar, der nicht durch den zweiten Teil der optischen Zeichen überlagert wird.

Während der Bestrahlung der Sicherheitseinlage 540, 550 mit UV-Licht einer ersten Wellenlänge ist für einen Betrachter der dritte Teil der optisch erkennbaren Zeichen sichtbar.

Während der Bestrahlung der Sicherheitseinlage 540, 550 mit UV-Licht einer zweiten Wellenlänge ist für einen Betrachter der vierte Teil der optisch erkennbaren Zeichen sichtbar.

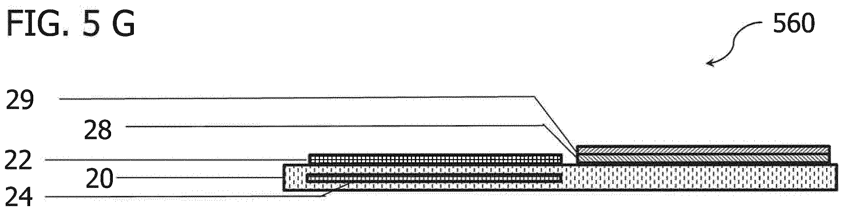

Figur 5G zeigt eine Sicherheitseinlage 560 mit dem Farbauftrag 22, dem ersten UV-Farbauftrag 28 und dem zweiten UV-Farbauftrag 29. Der erste UV-Farbauftrag 28 und der zweite UV-Farbauftrag 29 sind in Figur 5G mehrfarbige UV-Farbaufträge. Der erste UV-Farbauftrag 28 und der Farbauftrag 22 befinden sich auf der ersten transparenten Schicht 20. Der zweite UV-Farbauftrag 29 befindet sich auf dem Farbauftrag 28. Der Farbauftrag 22 reflektiert in dem in Figur 5G gezeigten Ausführungsbeispiel sichtbares Licht und UV-Licht.

Selbstverständlich sind auch Ausführungsformen der Sicherheitseinlage 560 möglich, bei welchen sich der Farbauftrag 22, der erste UV-Farbauftrag 28 und der zweite UV-Farbauftrag 29 jeweils nicht überlappen, sodass der Farbauftrag 22, der erste UV-Farbauftrag 28 und der zweite UV-Farbauftrag 29 jeweils unmittelbar auf der ersten transparenten Schicht 20 aufgetragen sind, ohne einander zu überlagern.

Der durch den ersten UV-Farbauftrag 28 gebildete dritte Teil der optisch erkennbaren Zeichen zeigt dem Betrachter der Sicherheitseinlage 560 während der Bestrahlung der Sicherheitseinlage 560 mit UV-Licht einer ersten Wellenlänge in der in Figur 5G dargestellten Ausführungsform zum Beispiel ein Gesichtsbild eines Inhabers der Sicherheitseinlage 560.

Das gleiche Gesichtsbild kann in der in Figur 5G dargestellten Ausführungsform gemeinsam durch den ersten Teil der optisch erkennbaren Zeichen, welcher durch die Schwärzungen 24 gebildet ist, und den zweiten Teil der optisch erkennbaren Zeichen, welcher durch den Farbauftrag 22 gebildet ist, gezeigt werden.

Somit ist während der Bestrahlung der Sicherheitseinlage 560 mit sichtbarem Licht das Gesichtsbild, bestehend aus dem ersten und dem zweiten Teil der optisch erkennbaren Zeichen sichtbar. Während der Bestrahlung der Sicherheitseinlage 560 mit UV-Licht ist das Gesichtsbild, bestehend aus dem ersten und dem zweiten Teil der optisch erkennbaren Zeichen und zusätzlich das gleiche Gesichtsbild, bestehend aus dem dritten Teil der optisch erkennbaren Zeichen sichtbar. Somit können die Gesichtsbilder miteinander abgeglichen werden, was zum Beispiel ein ersetzen des Geschichtsbild durch Unbefugte erschwert.

Der zweite UV-Farbauftrag 29 ist in dem in Figur 5G gezeigten Ausführungsbeispiel bi-fluoreszierend und bildet einen vierten Teil der optisch erkennbaren Zeichen, welche zusätzliche Sicherheitsmerkmale ausbilden. So zeigt der zweite UV-Farbauftrag 29 während der Bestrahlung der Sicherheitseinlage 560 mit UV Licht einer Wellenlänge von 313 nm dem Betrachter der Sicherheitseinlage 560 ein Sicherheitsmerkmal mit einem roten Farbeindruck. Während der Bestrahlung der Sicherheitseinlage 560 mit UV-Licht einer Wellenlänge von 365 nm zeigt die Sicherheitseinlage 560 dem Betrachter ein Sicherheitsmerkmal mit einem blauen Farbeindruck.

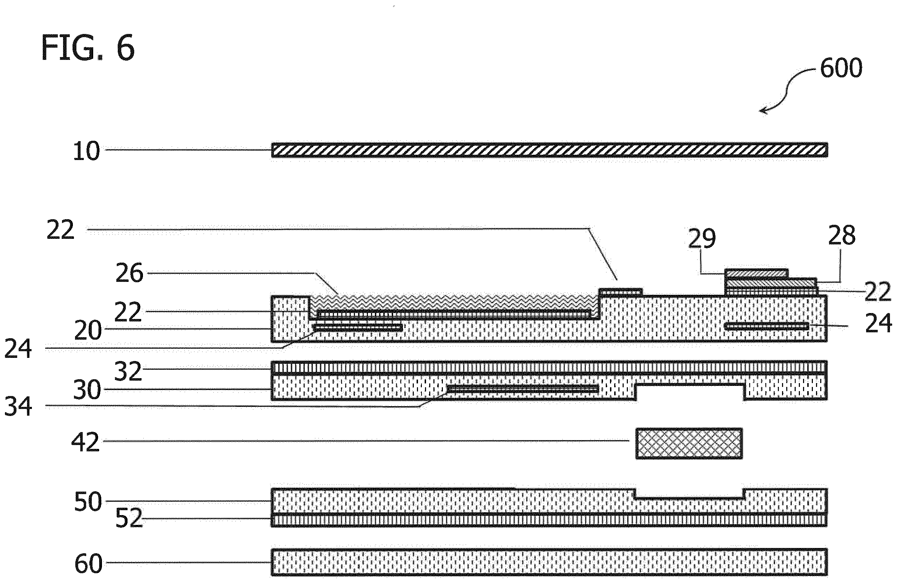

Figur 6 zeigt eine Sicherheitseinlage 600 mit optisch erkennbaren Zeichen für ein Ausweisdokument mit einer Vertiefung, einem ersten UV-Farbauftrag und einem zweiten UV-Farbauftrag.

Figur 6 zeigt eine Abdeckschicht 10, eine erste transparente Schicht 20, eine zweite transparente Schicht 30, ein Inlay 42, eine dritte transparente Schicht 50 und eine vierte transparente Schicht 60.

In alternativen Ausführungsformen kann die Sicherheitseinlage ergänzend oder alternativ zu der in Figur 6 gezeigten Abdeckschicht 10 auch eine aufgedruckte Lackschicht umfassen (nicht gezeigt). Bei Ausführungsformen, welche statt einer Abdeckschicht 10 eine aufgedruckte Lackschicht aufweisen, ist die Lackschicht analog zur Abdeckschicht 10 angeordnet und übernimmt deren Schutzfunktion für die Oberfläche der Sicherheitseinlage.

Das Inlay 42 befindet sich in einer Vertiefung der zweiten transparenten Schicht 30 und in einer Vertiefung der dritten transparenten Schicht 50.

Die erste transparente Schicht 20, die zweite transparente Schicht 30, die dritte transparente Schicht 50 und die vierte transparente Schicht 60 sind aus einem Polycarbonatwerkstoff gefertigt und enthalten kohlenstoffhaltige Additive, welche unter der Einwirkung insbesondere von Laserlicht Schwärzungen ausbilden. Die Schwärzung in können durch Regulierung der Intensität und der Einwirkungsdauer des Laserlichts in einer gewünschten Intensität ausgebildet werden.

Die erste transparente Schicht 20 hat mehrere Schwärzungen 24, welche durch die Einwirkung eines Strahls aus Laserlicht auf die in der ersten transparenten Schicht 20 enthaltenen kohlenstoffhaltigen Additive gebildet wurden.

Analog hierzu hat die zweite transparente Schicht 30 mehrere Schwärzungen 34 (schematisch ist nur eine Schwärzung dargestellt), welche durch die Einwirkung eines Strahls aus Laserlicht auf die in der zweiten transparenten Schicht 30 enthaltenen kohlenstoffhaltigen Additive gebildet wurden.

In einer Weiterentwicklung (nicht gezeigt) kann eine der transparenten Schichten 20, 30, 50, 60 und/oder das Inlay 40 ein Hologrammelement umfassen, welches für einen Betrachter der Sicherheitseinlage 440 sichtbar ist und einen visuell-holographischen Effekt hat. Der visuell-holographische Effekt kann sowohl unter sichtbarem wie auch unter unsichtbarem Licht, insbesondere unter infrarotem und/oder ultraviolettem Licht, optisch erkennbar sein.

Das Hologrammelement kann sich, zumindest aus der Perspektive eines Betrachters, mit einem Teil der optisch erkennbaren Zeichen zumindest teilweise überlagern.

In anderen Weiterentwicklungen (nicht gezeigt) kann das Hologrammelement auch zwischen den transparenten Schichten und/oder dem Inlay angeordnet sein. Insbesondere kann das Hologrammelement zwischen der ersten transparenten Schicht und der zweiten transparenten Schicht oder zwischen der zweiten transparenten Schicht und dem Inlay angeordnet sein.

In einem Ausführungsbeispiel (nicht gezeigt) kann sich das Hologrammelement mit dem dritten und/oder vierten Teil der optisch erkennbaren Zeichen zumindest teilweise überlagern.

In einer anderen Weiterentwicklung (nicht gezeigt) kann das Inlay 42 zumindest zwei opake Inlayschichten, welche einen RFID Chip und/oder ein Antennenelement umschließen, haben.

Weiter zeigt Figur 6 einen ersten Hintergrundfarbauftrag 32 und einen zweiten Hintergrundfarbauftrag 52. Der erste Hintergrundfarbauftrag 32 befindet sich auf der der Abdeckschicht 10 zugewandten Oberfläche der zweiten transparenten Schicht 30. Der zweite Hintergrundfarbauftrag 52 befindet sich auf der der Abdeckschicht 10 abgewandten Oberfläche der dritten transparenten Schicht 50.

Die in Figur 6 gezeigte erste transparente Schicht 20 hat eine Vertiefung.

Weiter zeigt Figur 6 einen Farbauftrag 22, welcher sich zum Teil in der Vertiefung der ersten transparenten Schicht 20 befindet. (Der Farbauftrag 22 ist in der schematischen Zeichnung deutlich überhöht dargestellt, um im Querschnitt sichtbar zu sein.)

Der Farbauftrag 22 ist durch einen Farbaufdruck aus den Basisfarben Cyan, Magenta und Yellow gebildet.

Der in Figur 6 gezeigte Farbauftrag 22 hat keine schwarzen Farbanteile, ist für infrarotes Licht transparent und reflektiert sichtbares und ultraviolettes Licht.

Der Farbauftrag 22, und die Schwärzungen 24, 34 ergänzen einander, zumindest aus der Perspektive eines Betrachters, zu einem Gesamtbild. Die Schwarzanteile des Gesamtbildes werden hierbei durch die Schwärzungen 24, 34 gebildet. Die Schwärzungen 24, 34 reflektieren sowohl unsichtbares, insbesondere ultraviolettes und infrarotes, Licht als auch sichtbares Licht.

Weiter zeigt Figur 6 ein Polymermaterial 26, welches sich in der Vertiefung der ersten transparenten Schicht 20 befindet. Das gezeigte Polymermaterial 26 ist für sichtbares und unsichtbares, insbesondere ultraviolettes oder infrarotes, Licht transparent und thermisch aushärtbar.

Das Polymermaterial kann in einer Ausführungsform (nicht gezeigt) einen Zusatz aufweisen, welcher UV-Licht in einem ersten und/oder in einem zweiten Wellenlängenbereich reflektiert, insbesondere UV-Licht reflektierende Farbpigmente.

In einer Weiterentwicklung (nicht gezeigt) kann das Polymermaterial forensische Marker, insbesondere Silizium, Siliziumdioxid, Glimmer, Titanoxid und/oder Zinnoxid enthalten.

Das in der Vertiefung der ersten transparenten Schicht 20 befindliche Polymermaterial 26 schließt bündig mit der Oberfläche der ersten transparenten Schicht 20 ab, sodass die Gesamtoberfläche der ersten transparenten Schicht 20 und des Polymermaterials 26 eine plane Fläche ohne erhabene oder vertiefte Abschnitte bildet.

Das in der Vertiefung befindliche transparente Polymermaterial umschließt zusammen mit der ersten transparenten Schicht 20 einen Teil des Farbauftrags 22.

Weiter zeigt Figur 6 einen ersten UV Farbauftrag 28, welcher sich auf dem Farbauftrag 22 befindet. Der erste UV Farbauftrag 28 ist für sichtbares und infrarotes Licht transparent und reflektiert UV-Licht einer ersten Wellenlänge.

Zudem zeigt Figur 6 einen zweiten UV-Farbauftrag 29, welcher für sichtbares und infrarotes Licht transparent ist und UV-Licht einer zweiten Wellenlänge reflektiert. Der zweite UV-Farbauftrag 29 befindet sich auf dem ersten UV-Farbauftrag 28.

Die Schwärzungen 24, 34 bilden somit einen ersten Teil der optisch erkennbaren Zeichen der Sicherheitseinlage 600 und der Farbauftrag 22 bildet einen zweiten Teil der optisch erkennbaren Zeichen der Sicherheitseinlage 600. Der erste UV-Farbauftrag 28 bildet einen dritten Teil der optisch erkennbaren Zeichen und der zweite UV-Farbauftrag 29 bildet einen vierten Teil der optisch erkennbaren Zeichen.

Wird die Sicherheitseinlage 600 mit sichtbarem Licht bestrahlt sind für den Betrachter somit der erste und der zweite Teil der optisch erkennbaren Zeichen sichtbar, wobei sich der erste und der zweite Teil der optisch erkennbaren Zeichen teilweise überlagern und so ein Gesamtbild bilden.

Wird die Sicherheitseinlage 600 mit infrarotem Licht bestrahlt ist für den Betrachter ausschließlich der erste Teil der optisch erkennbaren Zeichen sichtbar.

Wird die Sicherheitseinlage 600 mit UV-Licht einer ersten Wellenlänge bestrahlt, ist der dritte Teil der optisch erkennbaren Zeichen sichtbar.

Wird die Sicherheitseinlage 600 mit UV-Licht einer zweiten Wellenlänge bestrahlt, ist der vierte Teil der optisch erkennbaren Zeichen sichtbar.

## Patentansprüche

1. Sicherheitseinlage (300, 310) mit optisch erkennbaren Zeichen für ein Ausweisdokument, umfassend:
eine erste transparente Schicht (20), und
einen auf der ersten Schicht (20) befindlichen Farbauftrag (22), und
eine zweite transparente Schicht (30), wobei
die erste und die zweite Schicht (20, 30) miteinander verbunden sind, und
zumindest eine der Schichten (20, 30) Schwärzungen (24, 34) aufweist, und
der Farbauftrag (22) für Infrarotlicht transparent ist, und
ein erster Teil der optisch erkennbaren Zeichen durch die Schwärzungen (24, 34) in zumindest einer der Schichten (20, 30) gebildet ist, und
ein zweiter Teil der optisch erkennbaren Zeichen durch den Farbauftrag (22) so gebildet ist, dass
der erste und der zweite Teil der optisch erkennbaren Zeichen sichtbares Licht reflektieren und der erste Teil der optischen Zeichen infrarotes Licht reflektiert,
wobei die Sicherheitseinlage weiterhin eine Lackschicht umfasst, welche auf der ersten transparenten Schicht (20) und/oder auf dem Farbauftrag (22) aufgetragen ist, wobei die Lackschicht für sichtbares Licht und/oder infrarotes Licht und/oder UV-Licht transparent ist,
**dadurch gekennzeichnet,**
**dass** die erste Schicht (20) eine Vertiefung aufweist, wobei sich der Farbauftrag (22) zumindest teilweise im Bereich der Vertiefung auf der ersten Schicht (20) befindet, und wobei die Vertiefung mit der Lackschicht ausgefüllt ist, so dass zumindest ein Teil des Farbauftrags (22) von der ersten Schicht (20) und der Lackschicht umschlossen ist.

2. Sicherheitseinlage (320) für ein Ausweisdokument nach Anspruch 1, wobei
der Farbauftrag (22) unterschiedliche Farbanteile aus Cyan, Magenta und Yellow umfasst.

3. Sicherheitseinlage (320) für ein Ausweisdokument nach Anspruch 1 oder 2, wobei
zumindest eine der Schichten (20, 30) durch Einwirkung wenigstens eines Stahls aus Laserlicht zu schwärzen ist.

4. Sicherheitseinlage (320) für ein Ausweisdokument nach einem der vorangegangenen Ansprüche, **dadurch gekennzeichnet, dass**
die Schwärzungen (24, 34) in zumindest einer der Schichten (20, 30) Auslassungen haben, wobei
die Auslassungen insbesondere die Form von Buchstaben haben, welche von den Schwärzungen (24, 34) umgeben sind.

5. Sicherheitseinlage (300, 310, 320) für ein Ausweisdokument nach einem der vorangegangenen Ansprüche, weiter umfassend
eine transparente Abdeckschicht (10), und/oder
ein Inlay (40), welches zumindest eine erste opake Inlayschicht umfasst, und/oder
eine dritte, insbesondere durch Laserlicht zu schwärzende, transparente Schicht (50), und/oder
eine vierte, insbesondere durch Laserlicht zu schwärzende, transparente Schicht (60), und/oder
einen auf der zweiten Schicht (30) befindlichen ersten Hintergrundfarb-auftrag (32), und/oder
einen auf der dritten Schicht (50) befindlichen zweiten Hintergrund-farbauftrag (52).

6. Sicherheitseinlage (300, 310, 320) für ein Ausweisdokument nach Anspruch 5, wobei das Inlay (40)
eine zweite opake Inlayschicht, und/oder
eine Anordnung elektronischer Bauteile, insbesondere ein Antennenmodul und/oder einen RFID Chip, umfasst.

7. Sicherheitseinlage (300, 310, 320) für ein Ausweisdokument nach Anspruch 5 oder 6, wobei
zumindest eine der Schichten (20, 30, 40, 50, 60) ein Hologrammelement umfasst, und/oder wobei
zumindest ein Hologrammelement zwischen zwei der transparenten Schichten (20, 30, 50, 60) oder zwischen einer transparenten Schicht (20, 30, 50, 60) und dem Inlay (40) angeordnet ist, und/oder wobei
zumindest eine transparente Schicht (20, 30, 50, 60) mit einer weiteren transparenten Schicht (20, 30, 50, 60) und/oder der Abdeckschicht (10) und/oder mit dem Inlay (40) durch eine Lamination verbunden ist.

8. Sicherheitseinlage (300, 310, 320) für ein Ausweisdokument nach einem der vorangegangenen Ansprüche, **dadurch gekennzeichnet, dass**
zumindest eine Schicht aus Polycarbonat oder Polyethylenterephthalat gefertigt ist.

9. Sicherheitseinlage (300, 310, 320) für ein Ausweisdokument nach einem der vorangegangenen Ansprüche,
wobei
zumindest ein Teil der Lackschicht ein Fertigungsmaterial aus Methacrylat, Polyesterarcylat oder Urethanacrylat aufweist, und/oder
die Lackschicht ein thermisch- und/oder UV-aushärtbares Fertigungsmaterial aufweist.

10. Sicherheitseinlage (300, 310, 320) für ein Ausweisdokument nach Anspruch 9, **dadurch gekennzeichnet, dass**
die Lackschicht und/oder die transparente Abdeckschicht (10) und/oder zumindest eine der Schichten (20, 30, 40, 50, 60) nanoskalige Luminophore aufweist/aufweisen, welche dazu ausgebildet sind, UV-Licht einer vorbestimmten Wellenlänge zu reflektieren.

11. Sicherheitseinlage (300, 310, 320) für ein Ausweisdokument nach einem der Ansprüche 9 oder 10, **dadurch gekennzeichnet, dass**
die Lackschicht den Farbauftrag (22) und/oder einen ersten UV-Farbauftrag (28) abdeckt, sodass
der Farbauftrag (22) und/oder der ersten UV-Farbauftrag (28) vollständig zwischen der ersten transparenten Schicht (20) und der Lackschicht eingeschlossen sind.

12. Sicherheitseinlage (300, 310, 320) für ein Ausweisdokument nach einem der vorangegangenen Ansprüche, **dadurch gekennzeichnet, dass**
der Farbauftrag (22) und/oder der erste Hintergrundfarbauftrag (32) und/oder der zweite Hintergrundfarbauftrag (52) aus lösungsmittelhaltigen, insbesondere pigmentbasierten, Tinten gebildet sind, wobei
die lösungsmittelhaltigen, insbesondere pigmentbasierten, Tinten dazu geeignet sind, während eines Auftrageprozesses eine Oberfläche aus Polycarbonat oder Polyethylenterephthalat anzulösen und zumindest teilweise zu penetrieren, und/oder
der Farbauftrag (22) und/oder der erste Hintergrundfarbauftrag (32) und/oder der zweite Hintergrundfarbauftrag (52) forensische Marker, insbesondere Silizium, Siliziumdioxid, Glimmer, Titanoxid und/oder Zinnoxid enthalten.

13. Sicherheitseinlage (300, 310, 320) für ein Ausweisdokument nach einem der vorangegangenen Ansprüche
wobei
die Lackschicht einen Zusatz, insbesondere nanoskalige Luminophore, enthält, welcher UV-Licht reflektiert.

14. Verfahren zum Herstellen einer Sicherheitseinlage (300, 310, 320) mit optisch erkennbaren Zeichen für ein Ausweisdokument mit den Schritten:
- Bereitstellen einer ersten transparenten Schicht (20),
- Bereitstellen einer zweiten transparenten Schicht (30),
- Erstellen eines ersten Teils der optisch erkennbaren Zeichen durch Schwärzung (22, 34) in zumindest einer Schicht (20, 30) mittels eines Strahls aus Laserlicht,
- Erstellen eines zweiten Teils der optischen Zeichen durch Auftragen eines Farbauftrags (22) auf die erste Schicht (20),
**gekennzeichnet durch**
- Erstellen einer Vertiefung in der ersten Schicht (20), insbesondere **durch** Eindrücken und/oder Prägen und/oder Fräsen,
- Auffüllen der Vertiefung mit einer Lackschicht, und
- Auftragen der Lackschicht auf die erste transparente Schicht, während der Farbauftrag (22) noch nicht vollständig getrocknet oder ausgehärtet ist.

15. Verfahren zum Herstellen einer Sicherheitseinlage (300, 310, 320) nach Anspruch 14, wobei
zum Erstellen des Farbauftrages (22) solche lösungsmittelhaltige insbesondere pigmentbasierte Tinten verwendet werden, die
eine Oberfläche der ersten Schicht, welche insbesondere aus Polycarbonat oder Polyethylenterephthalat gefertigt ist, anlösen und zumindest teilweise penetrieren, und/oder
die Schichten mittels Lamination miteinander verbunden werden.

16. Verfahren zum Herstellen einer Sicherheitseinlage (300, 310, 320) nach Anspruch 14 oder 15, weiter umfassend zumindest einen der Schritte:
- Bereitstellen einer Abdeckschicht (10),
- Verbinden der ersten transparenten Schicht (20) mit der Abdeckschicht (10).

17. Vorrichtung zur Herstellung einer Sicherheitseinlage (300, 310, 320) mit optisch erkennbaren Zeichen für ein Ausweisdokument,
wobei die Sicherheitseinlage (300, 310, 320) folgendes umfasst:
eine erste transparente Schicht (20), die eine Vertiefung aufweist, und
einen auf der ersten Schicht (20) befindlichen Farbauftrag (22), wobei sich der Farbauftrag (22) zumindest teilweise im Bereich der Vertiefung auf der ersten Schicht (20) befindet, und eine zweite transparente Schicht (30), wobei
die erste und die zweite Schicht (20, 30) miteinander verbunden sind, und
zumindest eine der Schichten (20, 30) Schwärzungen (24, 34) aufweist, und
der Farbauftrag (22) für Infrarotlicht transparent ist, und
ein erster Teil der optisch erkennbaren Zeichen durch die Schwärzungen (24, 34) in zumindest einer der Schichten (20, 30) gebildet ist, und
ein zweiter Teil der optisch erkennbaren Zeichen durch den Farbauftrag (22) so gebildet ist, dass der erste und der zweite Teil der optisch erkennbaren Zeichen sichtbares Licht reflektieren und der erste Teil der optisch en Zeichen infrarotes Licht reflektiert, und
die Vertiefung mit der Lackschicht ausgefüllt ist, so dass zumindest ein Teil des Farbauftrags (22) von der ersten Schicht (20) und der Lackschicht umschlossen ist;
wobei die Vorrichtung folgendes umfasst:
eine Laservorrichtung, welche dazu angeordnet und ausgebildet ist, die Schwärzungen in einer ersten und/oder einer zweiten transparenten Schicht (20, 30) durch einen Strahl aus Laserlicht zu bewirken, und
eine Tintenstrahldruckvorrichtung, welche dazu angeordnet und ausgebildet ist, den Farbauftrag (22) auf die erste transparente Schicht (20) aufzutragen, sodass sich der Farbauftrag (22) zumindest teilweise im Bereich der Vertiefung auf der ersten Schicht (20) befindet, **gekennzeichnet durch**
eine Lackierungsvorrichtung, die dazu angeordnet und ausgebildet ist, eine Lackschicht auf die erste transparente Schicht (20) aufzutragen, wobei
die Lackierungsvorrichtung ferner dazu angeordnet und ausgebildet ist, die Vertiefung in der ersten transparenten Schicht mit der Lackschicht auszufüllen, sodass zumindest ein Teil des Farbauftrags (22) von der ersten Schicht (20) und der Lackschicht umschlossen ist.

## Claims

1. A security inlay (300, 310) having optically detectable indicia for an identification document, comprising:
a first transparent layer (20), and
a paint application (22) located on the first layer (20), and
a second transparent layer (30), wherein
the first and second layers (20, 30) are bonded together, and
at least one of the layers (20, 30) has blackenings (24, 34), and
the paint application (22) is transparent to infrared light, and
a first portion of the optically detectable indicia is formed by the blackenings (24, 34) in at least one of the layers (20, 30), and
a second portion of the optically detectable indicia is formed by the paint application (22) such that
the first and second portions of the optically detectable indicia reflect visible light, and the first portion of the optically detectable indicia reflect infrared light,
wherein the security insert further comprises a lacquer layer applied on the first transparent layer (20) and/or on the paint application (22),
said lacquer layer being transparent to visible light and/or infrared light and/or ultraviolet light,
**characterized in**
**in that** the first layer (20) has a depression, the paint application (22) being located at least partially in the region of the depression on the first layer (20), and the depression being filled with the lacquer layer, so that at least part of the paint application (22) is enclosed by the first layer (20) and the lacquer layer.

2. The security inlay (320) for an identification document according to claim 1, wherein
the paint application (22) comprises different colour portions of cyan, magenta and yellow.

3. The security inlay (320) for an identification document according to claim 1 or 2, wherein.
at least one of the layers (20, 30) is to be blackened by exposure to at least one steel of laser light.

4. The security inlay (320) for an identity document according to any one of the preceding claims, **characterized in that**
the blackenings (24, 34) have omissions in at least one of the layers (20, 30), wherein
in particular, the omissions are in the form of letters surrounded by the redactions (24, 34).

5. The security inlay (300, 310, 320) for an identity document according to any one of the preceding claims, further comprising
a transparent cover layer (10), and/or
an inlay (40) comprising at least a first opaque inlay layer, and/or
a third transparent layer (50), in particular to be blackened by laser light, and/or
a fourth transparent layer (60), in particular to be blackened by laser light, and/or
a first background color layer (32) located on the second layer (30), and/or
a second background color application (52) located on the third layer (50).

6. The security inlay (300, 310, 320) for an identification document according to claim 5, wherein the inlay (40) comprises
a second opaque inlay layer, and/or
an arrangement of electronic components, in particular an antenna module and/or an RFID chip.

7. The security inlay (300, 310, 320) for an identity document according to claim 5 or 6, wherein
at least one of the layers (20, 30, 40, 50, 60) comprises a hologram element, and/or wherein
at least one hologram element is arranged between two of the transparent layers (20, 30, 50, 60) or between a transparent layer (20, 30, 50, 60) and the inlay (40), and/or wherein
at least one transparent layer (20, 30, 50, 60) is connected to a further transparent layer (20, 30, 50, 60) and/or to the cover layer (10) and/or to the inlay (40) by lamination.

8. The security inlay (300, 310, 320) for an identity document according to any of the preceding claims, **characterized in that**
at least one layer is made of polycarbonate or polyethylene terephthalate.

9. The security inlay (300, 310, 320) for an identification document according to any one of the preceding claims,
wherein
at least a portion of the lacquer layer comprises a fabrication material of methacrylate, polyester acylate or urethane acrylate, and/or
the lacquer layer comprises a thermally and/or UV curable manufacturing material.

10. The security inlay (300, 310, 320) for an identity document according to claim 9, **characterized in that**
the lacquer layer and/or the transparent cover layer (10) and/or at least one of the layers (20, 30, 40, 50, 60) has/have nanoscale luminophores which are designed to reflect UV light of a predetermined wavelength.

11. The security inlay (300, 310, 320) for an identity document according to any of claims 9 or 10, **characterized in that**
the lacquer layer covers the paint application (22) and/or a first UV ink application (28) such that
the paint application (22) and/or the first UV ink application (28) are completely enclosed between the first transparent layer (20) and the lacquer layer.

12. The security inlay (300, 310, 320) for an identification document according to any one of the preceding claims, **characterized in that**
the paint application (22) and/or the first background ink application (32) and/or the second background ink application (52) are formed from solvent-containing, in particular pigment-based, inks, wherein
the solvent-containing, in particular pigment-based, inks are suitable for dissolving and at least partially penetrating a surface of polycarbonate or polyethylene terephthalate during an application process, and/or
the paint application (22) and/or the first background ink application (32) and/or the second background ink application (52) contain forensic markers, in particular silicon, silicon dioxide, mica, titanium oxide and/or tin oxide.

13. The security inlay (300, 310, 320) for an identification document according to any one of the preceding claims
wherein
the lacquer layer contains an additive, in particular nanoscale luminophores, which reflects UV light.

14. A method for producing a security insert (300, 310, 320) with optically recognizable characters for an identification document, comprising the steps:
- Providing a first transparent layer (20),
- Providing a second transparent layer (30),
- creating a first portion of the optically recognizable indicia by blackening (22, 34) in at least one layer (20, 30) using a beam of laser light,
- creating a second portion of the optically discernible characters by applying a paint application (22) to the first layer (20),
**characterized by**
- creating a depression in the first layer (20), in particular by indentation and/or embossing and/or milling,
- filling the depression with a lacquer layer, and
- applying the lacquer layer to the first transparent layer while the paint application (22) is not yet completely dry or cured.

15. The Method of manufacturing a security inlay (300, 310, 320) according to claim 14, wherein.
for the production of the paint application (22) such solvent-containing, in particular pigment-based, inks are used, which
dissolve and at least partially penetrate a surface of the first layer, which is made in particular of polycarbonate or polyethylene terephthalate, and/or
the layers are bonded to one another by means of lamination.

16. Method of manufacturing a security inlay (300, 310, 320) according to claim 14 or 15, further comprising at least one of the steps:
- Providing a cover layer (10),
- Bonding the first transparent layer (20) to the cover layer (10).

17. Apparatus for producing a security inlay (300, 310, 320) having optically recognizable indicia for an identification document,
wherein the security insert (300, 310, 320) comprises:
a first transparent layer (20) having a recess; and
a paint application (22) located on the first layer (20), the paint application (22) being located at least partially in the area of the indentation on the first layer (20), and a second transparent layer (30), wherein
the first and second layers (20, 30) are bonded together, and
at least one of the layers (20, 30) has blackenings (24, 34), and
the paint application (22) is transparent to infrared light, and
a first portion of the optically detectable indicia is formed by the blackenings (24, 34) in at least one of the layers (20, 30), and
a second portion of said optically detectable indicia is formed by said lacquer layer (22) such that said first and second portions of said optically detectable indicia reflect visible light and said first portion of said optically detectable indicia reflect infrared light, and
the recess is filled with the lacquer layer such that at least a portion of the paint application (22) is enclosed by the first layer (20) and the lacquer layer;
said device comprising:
a laser device arranged and adapted to effect the blackenings in a first and/or a second transparent layer (20, 30) by a beam of laser light, and
an ink jet printing device arranged and adapted to apply the ink deposit (22) to the first transparent layer (20) so that the paint application (22) is at least partially in the region of the indentation on the first layer (20), **characterized by**
a painting device arranged and configured to apply a lacquer layer to the first transparent layer (20), wherein
the painting device is further arranged and configured to fill the recess in the first transparent layer with the lacquer layer so that at least a part of the paint application (22) is enclosed by the first layer (20) and the lacquer layer.

## Revendications

1. Un insert de sécurité (300, 310) avec des signes optiquement reconnaissables pour un document d'identité, comprenant :
une première couche transparente (20), et
une application de peinture (22) sur la première couche (20), et
une deuxième couche transparente (30), dans laquelle
la première et la deuxième couche (20, 30) sont liées l'une à l'autre, et
au moins l'une des couches (20, 30) présente des noircissements (24, 34), et
la application de peinture (22) est transparente à la lumière infrarouge, et
une première partie des signes optiquement reconnaissables est formée par les noircissements (24, 34) dans au moins une des couches (20, 30), et
une deuxième partie des caractères optiquement reconnaissables est formée par l'application de peinture (22) de telle sorte que
la première et la deuxième partie des signes optiquement reconnaissables réfléchissent la lumière visible et que la première partie des signes optiques réfléchit la lumière infrarouge,
l'insert de sécurité comprenant en outre une couche de vernis qui est appliquée sur la première couche transparente (20) et/ou sur l'application de peinture (22),
la couche de vernis étant transparente à la lumière visible et/ou à la lumière infrarouge et/ou à la lumière UV,
**caractérisé en ce que**
**en ce que** la première couche (20) présente un creux, l'application de peinture (22) se trouvant au moins partiellement dans la zone du creux sur la première couche (20), et le creux étant rempli par la couche de vernis, de sorte qu'au moins une partie de l'application de peinture (22) est entourée par la première couche (20) et la couche de vernis.

2. L'insert de sécurité (320) pour un document d'identité selon la revendication 1, dans lequel
l'application de peinture (22) comprend différentes parties de couleur parmi le cyan, le magenta et le jaune.

3. L'insert de sécurité (320) pour un document d'identité selon la revendication 1 ou 2, dans lequel
au moins une des couches (20, 30) doit être noircie par l'action d'au moins un acier provenant d'une lumière laser.

4. L'insert de sécurité (320) pour un document d'identité selon l'une des revendications précédentes, **caractérisé en ce que**
les noircissements (24, 34) présentent des omissions dans au moins une des couches (20, 30), où
les omissions ont notamment la forme de lettres qui sont entourées par les noircissements (24, 34).

5. L'insert de sécurité (300, 310, 320) pour un document d'identité selon l'une quelconque des revendications précédentes, comprenant en outre
une couche de couverture transparente (10), et/ou
un inlay (40) qui comprend au moins une première couche d'inlay opaque, et/ou
une troisième couche transparente (50), en particulier à noircir par lumière laser, et/ou
une quatrième couche transparente (60), en particulier à noircir par lumière laser, et/ou
une première application de couleur de fond (32) sur la deuxième couche (30), et/ou
une deuxième couche de couleur de fond (52) se trouvant sur la troisième couche (50).

6. L'insert de sécurité (300, 310, 320) pour un document d'identité selon la revendication 5, l'insert (40) étant
une deuxième couche d'inlay opaque, et/ou
un ensemble de composants électroniques, notamment un module d'antenne et/ou une puce RFID.

7. L'insert de sécurité (300, 310, 320) pour un document d'identité selon la revendication 5 ou 6, dans lequel
au moins une des couches (20, 30, 40, 50, 60) comprend un élément holographique, et/ou dans lequel
au moins un élément holographique est disposé entre deux des couches transparentes (20, 30, 50, 60) ou entre une couche transparente (20, 30, 50, 60) et l'inlay (40), et/ou dans lequel
au moins une couche transparente (20, 30, 50, 60) est reliée à une autre couche transparente (20, 30, 50, 60) et/ou à la couche de recouvrement (10) et/ou à l'inlay (40) par une stratification.

8. L'insert de sécurité (300, 310, 320) pour un document d'identité selon l'une des revendications précédentes, **caractérisé en ce que**
au moins une couche est fabriquée en polycarbonate ou en polyéthylène téréphtalate.

9. L'insert de sécurité (300, 310, 320) pour un document d'identité selon l'une des revendications précédentes,
dans laquelle
au moins une partie de la couche de vernis présente un matériau de fabrication en méthacrylate, en polyester acrylate ou en uréthane acrylate, et/ou
la couche de vernis présente un matériau de fabrication durcissable à la chaleur et/ou aux UV.

10. L'insert de sécurité (300, 310, 320) pour un document d'identité selon la revendication 9, **caractérisé en ce que**
la couche de vernis et/ou la couche de couverture transparente (10) et/ou au moins l'une des couches (20, 30, 40, 50, 60) présente(nt) des luminophores à l'échelle nanométrique qui sont conçus pour réfléchir la lumière UV d'une longueur d'onde prédéterminée.

11. L'insert de sécurité (300, 310, 320) pour un document d'identité selon l'une des revendications 9 ou 10, **caractérisé en ce que**
la couche de vernis recouvre le application de peinture (22) et/ou un premier dépôt d'encre UV (28), de sorte que
le application de peinture (22) et/ou le premier dépôt d'encre UV (28) sont complètement enfermés entre la première couche transparente (20) et la couche de vernis.

12. L'insert de sécurité (300, 310, 320) pour un document d'identité selon l'une des revendications précédentes, **caractérisé en ce que**
l'application de peinture (22) et/ou la première application de couleur de fond (32) et/ou la deuxième application de couleur de fond (52) sont formées d'encres contenant des solvants, en particulier à base de pigments, où
les encres contenant des solvants, en particulier à base de pigments, sont appropriées pour dissoudre et pénétrer au moins partiellement une surface en polycarbonate ou en polyéthylène téréphtalate pendant un processus d'application, et/ou
l'application de peinture (22) et/ou la première application d'encre de fond (32) et/ou la deuxième application d'encre de fond (52) contiennent des marqueurs médico-légaux, en particulier du silicium, du dioxyde de silicium, du mica, de l'oxyde de titane et/ou de l'oxyde d'étain.

13. L'insert de sécurité (300, 310, 320) pour un document d'identité selon l'une des revendications précédentes.
dans laquelle
la couche de vernis contient un additif, en particulier des luminophores nanométriques, qui réfléchit la lumière UV.

14. Un procédé de fabrication d'un insert de sécurité (300, 310, 320) avec des signes optiquement reconnaissables pour un document d'identité, comprenant les étapes suivantes :
- Préparation d'une première couche transparente (20),
- Fournir une deuxième couche transparente (30),
- Création d'une première partie des caractères optiquement reconnaissables par noircissement (22, 34) dans au moins une couche (20, 30) au moyen d'un faisceau de lumière laser,
- création d'une deuxième partie des caractères optiques par application d'une application de peinture (22) sur la première couche (20),
**caractérisé par**
- Création d'un creux dans la première couche (20), notamment par enfoncement et/ou estampage et/ou fraisage,
- remplissage du creux avec une couche de vernis, et
- application de la couche de vernis sur la première couche transparente, alors que l'application de peinture (22) n'est pas encore complètement sèche ou durcie.

15. Le procédé de fabrication d'un insert de sécurité (300, 310, 320) selon la revendication 14, dans lequel
pour réaliser la application de peinture (22), on utilise des encres contenant des solvants, en particulier à base de pigments, qui
dissolvent et pénètrent au moins partiellement une surface de la première couche, qui est en particulier fabriquée en polycarbonate ou en polyéthylène téréphtalate, et/ou
les couches sont reliées entre elles par laminage.

16. Le procédé de fabrication d'un insert de sécurité (300, 310, 320) selon la revendication 14 ou 15, comprenant en outre au moins une des étapes :
- Fournir une couche de couverture (10),
- Liaison de la première couche transparente (20) à la couche de couverture (10).

17. Un dispositif pour la fabrication d'un insert de sécurité (300, 310, 320) avec des signes optiquement reconnaissables pour un document d'identité,
l'insert de sécurité (300, 310, 320) comprenant ce qui suit :
une première couche transparente (20) qui présente un creux, et
une application de peinture (22) se trouvant sur la première couche (20), l'application de peinture (22) se trouvant au moins partiellement dans la zone du creux sur la première couche (20), et
une deuxième couche transparente (30), dans laquelle
la première et la deuxième couche (20, 30) sont reliées entre elles, et
au moins une des couches (20, 30) présente des noircissements (24, 34), et
la application de peinture (22) est transparente à la lumière infrarouge, et
une première partie des signes optiquement reconnaissables est formée par les noircissements (24, 34) dans au moins une des couches (20, 30), et
une deuxième partie des signes optiquement reconnaissables est formée par l'application de peinture (22) de telle sorte que la première et la deuxième partie des signes optiquement reconnaissables réfléchissent la lumière visible et que la première partie des signes optiquement reconnaissables réfléchit la lumière infrarouge, et
la cavité est remplie par la couche de vernis, de sorte qu'au moins une partie de l'application de peinture (22) est entourée par la première couche (20) et la couche de vernis ;
le dispositif comprenant ce qui suit :
un dispositif laser agencé et conçu pour provoquer le noircissement d'une première et/ou d'une deuxième couche transparente (20, 30) par un faisceau de lumière laser, et
un dispositif d'impression à jet d'encre, qui est agencé et conçu pour appliquer le application de peinture (22) sur la première couche transparente (20), de sorte que le application de peinture (22) se trouve au moins partiellement dans la zone de l'indentation sur la première couche (20), **caractérisé par**
un dispositif de peinture, qui est agencé et conçu pour appliquer une couche de vernis sur la première couche transparente (20), dans lequel
le dispositif de peinture est en outre agencé et conçu pour remplir le creux dans la première couche transparente avec la couche de vernis, de sorte qu'au moins une partie de l'application de peinture (22) est entourée par la première couche (20) et la couche de vernis.
